# EUROPÄISCHE PATENTSCHRIFT

(11) **EP 2 941 320 B1**
(45) Veröffentlichungstag und Bekanntmachung des Hinweises auf die Patenterteilung: **21.02.2018**
(21) Anmeldenummer: 13820756.8
(22) Anmeldetag: 18.12.2013
(51) Int. Cl.: B05B 7/22, B05B 13/06, H05H 1/34, H05H 1/42, C23C 4/131

(54) **VORRICHTUNG ZUM THERMISCHEN BESCHICHTEN EINER OBERFLÄCHE**
DEVICE FOR THERMAL COATING OF A SURFACE
DISPOSITIF POUR LE REVÊTEMENT THERMIQUE DE SURFACE

(30) Priorität: 04.01.2013 DE 102013200062
(43) Veröffentlichungstag der Anmeldung: 11.11.2015
(73) Patentinhaber: Ford Global Technologies, LLC, Dearborn, MI 48126 (US)
(72) Erfinder: VERPOORT, Clemens, Maria, 40789 Monheim (DE); SCHRAMM, Leander, 07407 Remda-Teichel (DE); HAUSER, Enrico, 57520 Langenbach (DE)
(74) Vertreter: Dörfler, Thomas
(86) Internationale Anmeldenummer: PCT/EP2013/077037
(87) Internationale Veröffentlichungsnummer: WO 2014/106577

(56) Entgegenhaltungen:
- EP-A2- 0 994 637
- CH-A- 314 014
- DE-A1-102008 004 607
- DE-C- 943 268
- US-A- 2 982 845
- US-B1- 6 706 993

## Beschreibung

Die vorliegende Erfindung betrifft eine Vorrichtung zum thermischen Beschichten einer Oberfläche mit den Merkmalen des Anspruchs 1.

Vorrichtungen zum thermischen Beschichten einer Oberfläche sind zum Beispiel in der US 6,372,298 B1, der US 6,706,993 B1, die eine Vorrichtung gemäß dem Oberbegriff des Anspruchs 1 offenbart, US 5,808,270 A und der WO2010/112567 A1 beschrieben. Die dort genannten Vorrichtungen weisen gemeinsam auf: Eine Drahtzuführeinrichtung zur Zuführung eines abschmelzenden Drahtes, wobei der Draht als Elektrode wirkt; eine Quelle für Plasmagas zur Erzeugung eines Plasmagasstromes; einen Düsenkörper mit einer Düsenöffnung, durch die der Plasmagasstrom als Plasmagasstrahl auf ein Drahtende geleitet wird; und einer zweiten Elektrode, die im Plasmagasstrom angeordnet ist, bevor dieser in die Düsenöffnung eintritt. Auch die US 6,610,959 B2 und die WO2012/95371 A1 beschäftigen sich mit solchen Vorrichtungen.

Zwischen den beiden Elektroden bildet sich durch die Düsenöffnung hindurch ein Lichtbogen aus. Der aus der Düsenöffnung austretende Plasmastrahl trifft auf das Drahtende und bewirkt dort mit dem Lichtbogen ein Abschmelzen des Drahtes und den Abtransport des geschmolzenen Drahtmaterials in Richtung der zu beschichtenden Oberfläche. Ringförmig um die Düsenöffnung herum sind Sekundärluftdüsen angebracht, durch die ein Sekundärgasstrahl erzeugt wird, der das vom Drahtende abgeschmolzene Material trifft und so eine Beschleunigung des Transportes in Richtung der zu beschichtenden Oberfläche und eine Sekundärzerstäubung des geschmolzenen Drahtmaterials bewirkt.

Die WO2010/112567 A1 offenbart, dass der Lichtbogen direkt zwischen der Anode und der Kathode gezündet werden kann, so dass kein Pilotlichtbogen erforderlich ist. Gemäß der Lehre der US 5,808,270 A (= DE 697 29 805 T2) wird allerdings zunächst ein Pilotlichtbogen zwischen der Plasmagasdüse und der Kathode gezündet. Ist dieser Pilotlichtbogen gezündet, kann der Lichtbogen auf den Draht transferiert werden. Weiter offenbart die US 5,808,270 A eine Kathodeneinheit, die aus einem Kupfergehäuse besteht, welche einen Einsatz aus thoriertem Wolfram aufweist. Die Kathodeneinheit wird mit einem Kathodenhalter verschraubt. Der Kathodenhalter wird sodann in üblicher Art und Weise in dem Gehäuse eingesetzt.

Die DE 10 2009 004 581 A1 offenbart eine Spritzvorrichtung zum Lichtbogendrahtspritzen, umfassend eine drahtförmige verbrauchbare Elektrode, eine nicht verbrauchbare Elektrode, eine Energiequelle zur Erzeugung und Aufrechterhaltung eines Lichtbogens zwischen den beiden Elektroden und eine Drahtvorschubeinrichtung zur Nachführung der drahtförmigen, verbrauchbaren Elektrode. Mittels einer Steuereinheit sei eine Spannung und/oder eine Stromstärke der Energiequelle überwachbar. Die Steuereinheit regelt die Drahtvorschubgeschwindigkeit in Abhängigkeit von der Stromstärke und/oder der Spannung der Energiequelle automatisch. Mittels eines Drahtrichters wird die verbrauchbare Elektrode gerade gerichtet in den Brenner eingeführt, um eine axiale Ausrichtung und eine exakte Zuführung der drahtförmigen verbrauchbaren Elektrode zur nicht verbrauchbaren Elektrode sicherzustellen.

Die WO97/14527 A1 beschäftigt sich mit einer Drahtzuführeinrichtung insbesondere für einen Lichtbogenprozess. Dabei beschreibt die WO97/14527 A1 eine Zuführeinrichtung, welche eine Kugelrollspindel hat, deren Kugeln sich schraubenartig um den Draht bewegen. Dabei wird die Rotationsbewegung des Antriebs in eine lineare Bewegung der Drahtelektrode umgewandelt.

Heutige Verbrennungsmotoren bzw. deren Motorblöcke können aus einem Metall oder Leichtmetall, wie z.B. Aluminium gegossen sein, wobei insbesondere Aluminiumblöcke an ihren Zylinderbohrungen eine Eisen- bzw. Metallschicht aufweisen. Die Metallschicht kann thermisch aufgespritzt sein. Als thermische Spritzverfahren sind neben Zweidraht-Lichtbogen-Spritzverfahren (TWA), HVOF-Spritzverfahren und Plasma-Pulver-Spritzverfahren die oben genannten Verfahren als Plasma-Draht-Spritzverfahren oder auch als PTWA (Plasma Transferred Wire Arc) bekannt. Eine Beschichtung der Zylinderbohrungen mittels der Plasma-Draht-Spritzverfahren, also mit dem PTWA ist dahin vorteilhaft, weil so eine Beschichtung hergestellt werden kann, welche sich positiv auf einen reduzierten Verschleißfaktor, auf eine verlängerte Lebensdauer des Motors bei geringerem Ölverbrauch im Vergleich zu konventionellen Auskleidungen mittels eingegossener Laufbuchsen aus Graugussmaterial auswirkt.

Allerdings beherbergen die bekannten Vorrichtungen zum thermischen Beschichten und die damit durchgeführten Verfahren einige Nachteile. Die bekannten Vorrichtungen werden beispielsweise in eine zu beschichtende Zylinderbohrung eingefahren und rotieren im Betrieb bei einer gleichzeitigen linearen Auf- und Abbewegung um sich selbst. Ersichtlich ist dabei, dass bei der Rotation der Vorrichtung die in der Zylinderbohrung strömenden Prozessgase durch ebene Flächen der Vorrichtung, insbesondere durch ebene Flächen des Gehäuses, einer Schaufelwirkung ähnlich mitgenommen werden, so dass zusätzliche Verwirbelungen entstehen.

Für höhere Drahtförderraten, werden entsprechend höhere Stromstärken benötigt, welche gleichzeitig eine höhere thermische Belastung der Vorrichtungen bewirken. Durch den Wärmeeintrag des Plasmas und der flüssigen Spritzpartikel wird die Oberfläche der Bohrung stark aufgeheizt und es treten sehr hohe Oberflächentemperaturen auf. Durch die aus der Bohrung strömenden, erwärmten Prozessgase werden die Vorrichtungen zusätzlich erwärmt. Neben den hohen Arbeitstemperaturen stellen auch die Spritzstäube und Overspray Partikel ein Problem für den sicheren Langzeit-Betrieb des Brenners dar.

Nicht alle flüssigen Spritzpartikel kommen auf der Oberfläche zur Haftung, der Auftragswirkungsgrad in der Bohrung liegt bei ca. 87%, somit ergeben sich bei entsprechend höheren Drahtförderungsraten von beispielhaft 10kg/h sehr hohe Staubmengen. Bei diesen Spritzstäuben handelt es sich um heiße, teigige Partikel, die durch die strömenden Prozessgase in der Bohrung von der (Aluminium) Oberfläche oder von den bereits gebildeten Spritzschichten abgelenkt werden. Diese Partikel können dann auf der Oberfläche der Vorrichtung, insbesondere auf deren Gehäuse zur Ablagerung führen, die mit zunehmender Spritzzeit zu dicken Belägen anwachsen können und dann unkontrolliert als größere Stücke abplatzen können und sich dann evtl. in die Funktionsbeschichtung einbetten können oder zu einem Kurzschluss an der Vorrichtung führen können. Dieser Kurzschluss kann auftreten, sobald sich ein geschlossener elektrisch leitfähiger Belag auf der äußeren Oberfläche der Vorrichtung gebildet hat.

Auch weisen die bekannten Vorrichtungen eine solche Dimension auf, dass diese die in ihrem Durchmesser immer kleiner werdenden Zylinderbohrungen nicht mehr mit den erforderlichen, erfolgversprechenden Parametern beschichten können.

Vor diesem Hintergrund liegt der vorliegenden Erfindung die Aufgabe zugrunde, eine verbesserte Vorrichtung zum thermischen Beschichten von Oberflächen anzugeben, mit welcher bei Rotation um eine eigene Achse bei gleichzeitig linear ausgeführter Bewegung eine Innenbeschichtung auch kleinerer Bohrungsdurchmesser von weniger als 60mm bei hoher Auftragsleistung und erhöhter Standzeit bei gleichzeitig minimiertem Wartungsaufwand erreichbar sein soll.

Diese Aufgabe wird durch eine Vorrichtung mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst eine Vorrichtung zum thermischen Beschichten einer Oberfläche, welche zumindest ein Gehäuse, eine Kathode, einen Primärgasverteiler, einen Sekundärgasverteiler, elektrisch und thermisch wirkende Isolationselemente, sowie eine Anode aufweist, welche als abschmelzender Draht ausgebildet über eine Drahtführung in eine Düse geführt wird, wobei die Düse zentriert montiert ist, und an einer ihrer Seiten in einer Ebene radial angeordnete Öffnungen aufweist.

Das Gehäuse kann einteilig oder mehrteilig, bevorzugt zweiteilig mit zumindest einem Hauptelement und zumindest einem Deckelelement ausgeführt sein, wobei die Düse eine Primärgasdüse und eine Sekundärgasdüse aufweist, wobei die Primärgasdüse unter Parallelschaltung eines Sekundärgasverteilers an dem Primärgasverteiler zentriert montiert ist und an ihrer zur Sekundärgasdüse orientierten Seite in einer Ebene radial angeordnete Öffnungen aufweist. Die Öffnungen können als Schlitze oder Bohrungen ausgeführt sein.

In günstiger Ausgestaltung kann vorgesehen sein, dass die Primärgasdüse aus zwei Werkstoffen gebildet ist, wobei ein bevorzugt wolframlegierter Kern vorzugsweise mit Kupfer (wobei Kupfer im Sinne der Erfindung als metallisch bezeichnet wird) umgossen ist. So kann trotz hoher Wärmebelastung ein optimierter Wärmeübergang bei geringer Ausdehnung sowie hohe Verschleißfestigkeit in der Nähe des Lichtbogens durch den wolframlegierten Kern erreicht werden. Auch kann eine Kühlung und somit eine Einschnürung des Lichtbogens im Düsenwandbereich erreicht werden. Die Primärgasdüse kann auch aus einer Keramik gebildet sein.

Zielführend ist auch, dass die Primärgasdüse potentialfrei isoliert ist, so dass ein Lichtbogen direkt zwischen der Kathode und der als Draht ausgeführten Anode gezündet wird. Insofern kann die Primärgasdüse auch aus einer Keramik gebildet sein, so dass diese elektrisch neutral ist. Die Primärgasdüse dient auch zum Bündeln des Primärgases. Zweckmäßig ist, wenn die Primärgasdüse eine zylindrische Außenform aufweist, wobei an der zum Primärgasverteiler orientierten Seite Eingreifelemente zum Eingreifen in korrespondierende Vertiefungen des Primärgasverteilers angeordnet sind, so dass jedenfalls die zentrierte Montage beider Komponenten zueinander erreicht wird. Die Primärgasdüse kann sowohl eine zylindrische als auch eine divergente Innenform oder eine Laval-Kontur aufweisen.

Durch die Anordnung der Öffnungen, also der Bohrungen oder der Schlitze in einer gemeinsamen Radialebene wird in Verbindung mit der Sekundärgasdüse ein Sekundärgaslabyrinth gebildet, so dass das Sekundärgas zur Kühlung der Primärgasdüse herangezogen werden kann. Dabei ist dem Umstand Rechnung getragen, dass die höchste Wärmebelastung in der Nähe des Lichtbogens vorhanden ist.

Um die günstige Kühlung der Primärgasdüse mit Sekundärgas erreichen zu können, wird vorteilhaft vorgeschlagen, dass die Anzahl der radialen Öffnungen, also der Bohrungen/ Schlitze symmetrisch größer als eine Sekundärgasbohrungsanzahl von Sekundärgasbohrungen in der Sekundärgasdüse ist. Beispielsweise können in der Primärgasdüse zwölf radiale, in einer Ebene angeordnete Schlitze vorgesehen sein, so dass in der Sekundärgasdüse nur acht Sekundärgasbohrungen angeordnet sein könnten. Wären zehn Schlitze vorgesehen, sind beispielhaft sechs Sekundärgasbohrungen möglich. Zur Verteilung der Strömungen von den Öffnungen, also von den Bohrungen/ Schlitzen der Primärgasdüse, in die Bohrungen der Sekundärgasdüse kann als weiterer Teil des Labyrinthes in der Primär- und/oder Sekundärgasdüse eine kreisringförmige Nut integriert werden, deren Innen- und Außendurchmesser vorteilhaft den sich ergebenden Durchmessern der Sekundärgasbohrungen in der Öffnungsebene, also in der Schlitzebene entspricht. Grundsätzlich ist die Primärgasdüse im Primärgasverteiler zentriert, und zentriert die Sekundärgasdüse.

Zweckmäßig ist auch im Sinne der Erfindung, wenn die Kathode aus zwei Werkstoffen gebildet ist, wobei ein bevorzugt wolframlegierter Kern vorzugsweise mit Kupfer umgossen ist. Diese Ausgestaltung wirkt sich vorteilhaft auf einen optimierten Strom- und Wärmeübergang bei gleichzeitig hoher Temperatur- und Verschleißbeständigkeit des wolframlegierten Kernes aus, wobei eine geringe Elektronenaustrittsarbeit notwendig ist.

In zielführender Ausgestaltung ist die Kathode an ihrem bevorzugt wolframlegierten Kern fingerförmig ausgeführt, was in Verbindung mit einem konvergenten Einlaufgebiet der Primärgasdüse zu einer geringen Lichtbogeneinschnürung führt, wobei eine hilfreiche Temperaturverteilung im Lichtbogenansatzpunkt erreichbar ist, was wiederum günstig für die Standzeit der Kathode ist. Ebenso wird die Strömung nicht an den Kanten der Kathode verwirbelt. Hilfreich ist auch, wenn die Primärgasdüse ein zentriert zur Kathode konvergentes oder ein divergent konvergentes Einlaufgebiet des Primärgases aufweist, so dass eine Verringerung von Verwirbelungen des Primärgases erreicht wird, um eine weniger turbulente Primärgasströmung zu erreichen.

Der umgossene Kupfermantel ist in günstiger Ausgestaltung beispielhaft hutartig mit einem Hülsenabschnitt und einem daran angeformten Flanschabschnitt ausgeführt. In dem Hülsenabschnitt ist der fingerförmige, bevorzugt wolframlegierte Kern aufgenommen. Der fingerförmige Kern zeichnet sich dadurch aus, dass dieser den Hülsenabschnitt mit seiner bevorzugt verrundeten Spitze überragt. Möglich ist auch noch im Spitzenbereich des fingerförmigen Kernes zumindest eine umlaufende Nut einzubringen. An dem Außenumfang des Hülsenabschnittes ist ein Außengewinde angeordnet, welches mit einem korrespondierenden Innengewinde des Gehäuses, bevorzugt in dessen Deckelelement zusammenwirkt. Hier liegt ein weiterer Vorteil der Erfindung, bei welcher die Kathode in das Gehäuse, bevorzugt in das Deckelelement, einschraubbar ist. Damit ist die Kathode über den Gewindeabschnitt und mittels des Flansches vorteilhaft zentriert innerhalb des Gehäuses angeordnet, und verbleibt auch in dieser zentrierten Position trotz der erheblichen Wärmeeinwirkung während des Betriebes. Die Kathode ist also vorteilhaft kraftformschlüssig mit dem Gehäuse verbindbar, wobei eine einfache kraftschlüssige Lagerung der Kathode innerhalb des Gehäuses vermieden ist, so dass die Wärmeeinwirkung keine schädlichen Einflüsse auf ein ungewolltes Lösen der Schraubverbindung hat, wobei auch schädliche Wärmespannungen keinen Einfluss auf eine mögliche Verlagerung der Kathode mehr haben. Dieser Vorteil ist auch bei den bisher und noch näher zu beschreibenden Komponenten ersichtlich, worauf noch eingegangen wird. Zielführend ist, wenn eine Schlüsselfläche außenliegend an einem Flanschabschnitt des Kupfermantels angeordnet ist, also von außerhalb des Gehäuses zugänglich ist. Die Kathode kann so einfach durch Herausschrauben inspiziert und/oder ausgetauscht werden, ohne dass das gesamte Gehäuse geöffnet werden muss.

In bevorzugter Ausgestaltung ist das Gehäuse (auf das weiter unten noch genauer eingegangen wird), aus einem Messing gebildet, so dass thermische Spannungen und damit die Festigkeit der Gewindeverbindung aufgrund der unterschiedlichen Wärmeausdehnungskoeffizienten Wolframlegierung/Kupfer/Messing Beachtung finden werden. Eine Abdichtung der Kathode zum Gehäuse kann mittels eines O-Rings zwischen Flansch und Gehäuse, also z.B. zum Deckelelement erreicht werden. Ist das Gehäuse mehrteilig, also zum Beispiel zweiteilig, sind natürlich das Hauptelement und das Deckelelement aus einem Messing gebildet.

In weiter zielführender Ausgestaltung ist der Primärgasverteiler aus einer Keramik gebildet, und wirkt so zu seiner eigentlichen Gasverteilungsfunktion auch als thermischer und elektrischer Isolator zwischen dem Gehäuse, der Kathode und der Primärgasdüse. Der Primärgasverteiler weist in bevorzugter Ausführung konvergent und/oder konzentrisch angeordnete Bohrungen auf, welche sich von einer Unterseite zu einer zur Primärgasdüse orientierten Seite erstrecken. So ist eine homogene Gasverteilung bei gleichzeitiger Kathodenkühlung mittels des Primärgases möglich. Mit der zielführenden Anordnung und Ausführung der Bohrungen sind Verwirbelungen des Primärgases vermeidbar, was sich wiederum positiv auf eine verringerte Kathodentemperatur bezogen auf verwirbeltes Primärgas auswirkt. Günstig ist, wenn eine hohe Anzahl an Bohrungen in dem Primärgasverteiler angeordnet ist, wobei so viele Bohrungen vorgesehen sein können, dass der Primärgasverteiler quasi als Membran ausgeführt werden kann. Mit diesen Maßnahmen ist die homogene Gasverteilung unter Vermeidung von Verwirbelungen weiter verbesserbar. Im Gegensatz zu den üblichen Vortex-Strömungen des Primärgases, wird durch die weniger turbulente Strömung des Primärgases in den Bereichen mit Querschnittsverringerungen, speziell im Bereich der Kathodenspitze bzw. des Lichtbogenansatzpunktes eine höhere Strömungsgeschwindigkeit des Primärgases erreicht. Das Primärgas wird weniger aufgeheizt, die Wärme wird durch das Primärgas schneller abgeführt. Mit der homogenen Anströmung der Kathode durch die konvergent zulaufenden Bohrungen wird eine Kühlung der Kathode speziell im unteren Bereich erreicht, mit dem Ziel, den Wärmeübertrag auf das Gehäuse zu vermindern. Aus gleichem Grunde ist im Gehäuse ein großer, ringförmiger Kanal zur Verteilung des Primärgases in unmittelbarer Nähe zum Befestigungsgewinde der Kathode angeordnet. In vorteilhafter Ausgestaltung kann die Oberfläche der Kathode im betreffenden zylindrischen Teil der Kathode durch Nuten in Strömungsrichtung des Primärgases erhöht werden. In besonders vorteilhafter Ausgestaltung ist der Primärgasverteiler keramikgerecht konstruiert, und zentriert die Primärgasdüse, ist aber selbst im Deckelelement des Gehäuses zentriert.

Günstig im Sinne der Erfindung ist, wenn der Sekundärgasverteiler konvergent und/oder konzentrisch angeordnete Bohrungen mit unterschiedlichen Bohrungsquerschnitten aufweist, welche so einen Ausgleich der Sekundärgasströme innerhalb des Gehäuses bewirken können. Die Bohrungen bewirken eine günstige Verteilung des Sekundärgases. Die Bohrungsanzahl ist bevorzugt so bemessen, dass diese größer ist als die Anzahl der Öffnungen (Bohrungen/Schlitze) in der Primärgasdüse. In Zusammenwirken mit der Primärgasdüse wird so quasi ein weiteres Sekundärgaslabyrinth gebildet und so die Primärgasdüse auch außen gut gekühlt. In weiter bevorzugter Ausgestaltung weist der Sekundärgasverteiler eine Montagehilfe auf, so dass die Bohrungen in ihrem Durchmesser gezielt und dem gewünschten Effekt (s.o.) entsprechend orientiert werden können. Die Funktionen des Sekundärgasverteilers können selbstverständlich auch als Erweiterung der Sekundärgasdüse, des Primärgasverteilers oder des Hauptisolators ausgeführt werden.

Vorteilhaft ist die Sekundärgasdüse aus einer Keramik gebildet und isoliert thermisch und/oder elektrisch das Gehäuse, die Kathode, die Drahtführung aber auch den Draht, sowie gegebenenfalls die Primärgasdüse. Die Sekundärgasdüse weist eine zur Primärgasdüse angeordnete Seite und gegenüberliegend dazu einen, eine zentrale Öffnung umgebenden Wandabschnitt auf, in welchem eine einzige Ausnehmung für den Draht eingebracht ist. Die Sekundärgasdüse weist bevorzugt konvergent und konzentrisch angeordnete Bohrungen auf, so dass das Sekundärgas einen Druckkegel bildet. Die Bohrungsanordnung ist dabei günstiger Weise symmetrisch zur Drahtförderachse. In vorteilhafter Ausführung bilden die Bohrungsachsen einen theoretischen Zerstäubungspunkt, wobei allerdings der zuvor genannte Druckkegel erzeugt wird. Das bedeutet, dass sich die durch die jeweilige Bohrung ausströmenden Sekundärgassäulen entgegen dem theoretischen Zerstäubungspunkt der Bohrungsachsen nicht schneiden, sondern quasi einen einhüllenden Druckkegel bilden. Die Innenform der Sekundärgasdüse stellt im Bereich der der Primärgasdüse zugewandten Seite eine Verlängerung der Innenkontur der Primärgasdüse dar. Die Bildung eines Druckkegels wird somit durch das zentral strömende Primärgas zusätzlich unterstützt. Vom Bereich der Sekundärgasbohrungen bis zum Sekundärgasdüsenende werden durch die innere Sekundärgasdüsenkontur zur Unterstützung der Druckkegelbildung Verwirbelungen vermieden. Die Sekundärgasbohrungen werden gezielt so ausgeführt, dass durch die Bohrungsanordnung, den Bohrungswinkel und den Bohrungsdurchmesser bedingt, die Sekundärgasströmung der einzelnen Bohrungen an dem zugeführten Draht vorbeigeführt wird und sich somit der Druckkegel gleichmäßig um den Schmelzpunkt des Drahtes hinter dem zugeführten Draht ausbildet. Weiterhin wird somit im Bereich des zugeführten Drahtes ein Unterdruckgebiet gebildet, so dass schmelzflüssige Partikel, welche am Draht auf der der Düse zugewandten Seite entstehen, um den Draht in die Sekundärgasströmung befördert werden. Der Effekt bekannter Vorrichtungen, dass die Schmelze durch die auftretenden Vektorkräfte im Lichtbogenansatzpunkt am Draht und die Primärgasströmung, um die im Lichtbogenansatzpunkt entstehende kurze Drahtflanke, als schmelzflüssige Tropfen in die Sekundärgasströmung befördert wird und sich dort in kleinere schmelzflüssige Tropfen zerteilt, wird durch die erfindungsgemäße gleichmäßige Anordnung und Ausbildung des Druckkegels zusätzlich unterstützt. Weiterhin wird erreicht, dass auch bei längeren Drahtflanken bereits kleinere schmelzflüssige Tröpfchen um die Drahtflanke befördert werden, also größere schmelzflüssige Tropfen vermieden werden und ein konstanter Partikelstrahl gewährleistet ist. Damit wird dem Umstand Rechnung getragen, dass speziell bei kleineren Bohrungsdurchmessern der Spritzabstand, also der Abstand zwischen Rotationsachse und zu beschichtender Oberfläche, geringer ist. Durch die gezielte Vermeidung der Anströmung des Drahtes im Bereich der Drahtzuführung, wird ferner vermieden, dass schmelzflüssige Tröpfchen auf der der Düse zugewandten Seite am Draht in Richtung der Drahtzuführung befördert werden können. In zweckmäßiger Ausgestaltung sind die Bohrungsanzahl und der Gesamtbohrungsquerschnitt angepasst an den Sekundärgasdurchsatz, um so die Strömungsgeschwindigkeit, also auch die Partikelgeschwindigkeit, der in Richtung der zu beschichtenden Oberfläche transportierten Metalltröpfchen, einzustellen.

Günstig ist weiter, wenn die Sekundärgasdüse, insbesondere deren Wandabschnitt in Förderrichtung nur eine einzige Einlauföffnung aufweist, gegenüberliegend dazu aber geschlossen ist, so dass der Draht entgegen dem Vorgehen bei bekannten Vorrichtungen nicht aus der Vorrichtung heraus transportiert werden kann. Neben der Begünstigung der gleichmäßigen Druckkegelausbildung kann auf diese Art die Steuer- und Kontrolleinrichtung des Drahtvorschubes durch Unregelmäßigkeiten in der Drahtvorschubgeschwindigkeit, beispielsweise im Falle eines nicht komplett abgeschmolzenen Drahtes, eventuelle Prozessstörungen erkennen. Insofern ist eine einfache Montage- und Demontagemöglichkeit vorzusehen. Die Vorrichtung wird beispielsweise mit einer rastenden Zentralverschraubung an einer Rotationsspindel befestigt. Die Sekundärgasdüse ist durch geeignete Mittel durch die Primärgasdüse zentriert, wobei die Sekundärgasdüse so ausgeführt werden kann, dass thermische Spannungen durch zusätzliche Isolationselemente, beispielsweise durch einen Hauptisolator bzw. einen separaten Düsenisolator vermieden sind.

Insgesamt ergibt sich eine vorgegebene Montagereihenfolge, wobei die Kathode durch Einschrauben in dem Gehäuse, bevorzugt in dem Deckelelement des Gehäuses zentriert wird, und wobei das Gehäuse, bevorzugt dessen Deckelelement, den Primärgasverteiler zentriert. Die Primärgasdüse ist an dem Primärgasverteiler zentriert und zentriert die Sekundärgasdüse. Die Komponenten sind dabei vorteilhaft untereinander verbunden, und nicht, wie in bekannten Vorrichtungen, mit dem Gehäuse verbunden. Dies ist dahin vorteilhaft, dass eine gemeinsame Mittelachse gebildet ist, wobei sich die Komponenten trotz der erheblichen thermischen Einflüsse aufgrund von Wärmespannungen nicht verlagern.

Zielführend ist, wenn die Isolationselemente beispielhaft durch mehrere Komponenten als Düsenring, Düsenisolator und als Hauptisolator ausgeführt sind.

Der Düsenring ist aus einer Keramik, bevorzugt aus einer Hochleistungskeramik gebildet und wirkt elektrisch und thermisch isolierend zwischen dem Gehäuse und der Drahtführung. Der Düsenring ist der einzige, äußere Isolator in der sonst metallischen äußeren Form der gesamten Vorrichtung bzw. des Gehäuses. Die Funktion des Düsenringes kann auch als Erweiterung der Sekundärgasdüse ausgeführt werden. In möglicher Ausgestaltung ist der Düsenring trichterförmig ausgebildet und erstreckt sich von einem Außenring in Richtung zu einer zentralen Öffnung. Möglich ist auch, den Düsenring hülsenartig mit einem sich von einem Fußflansch wegerstreckenden Wandabschnitt auszuführen. Möglich ist auch, noch einen trichterförmigen Abschnitt vorzusehen, an welchem sich ein von diesem wegerstreckender Wandabschnitt angeordnet ist. In bevorzugter Ausgestaltung ist der Düsenring zumindest an seiner von der Kathode wegorientierten Oberfläche poliert, bevorzugt hochglanzpoliert, um Anhaftungen zu vermeiden. Der Düsenring kann einteilig oder mehrteilig sein, wobei bevorzugt Keramiken bzw. Werkstoffe wie z.B. Siliziumnitrid, Aluminiumnitrid, Bornitrid, Zirkonoxid, Aluminiumoxid, ATZ oder ZTA zum Herstellen des Düsenrings verwendet werden können. Überraschend wurde festgestellt, dass insbesondere durch den Einsatz von Aluminiumnitrid gute Ergebnisse erreicht werden, um reflektierte und/oder abgelenkte Partikel zu vermeiden und/oder entfernen zu können. Aufgrund der besonders hohen Wärmeleitfähigkeit und der relativ hohen Temperaturbeständigkeit von Aluminiumnitrid wird den reflektierten und/oder abgelenkten Partikeln, welche auf die polierte Düsenringoberfläche auftreffen, sehr schnell die Wärme entzogen, so dass die Partikel erstarren, ohne lokale Defekte am Aluminiumnitrid zu verursachen. Eine mechanische Verklammerung der Partikel wird durch die Oberflächenbeschaffenheit vermieden. Einen anderen keramischen Werkstoff für den Düsenring mit sehr hoher Wärmeleitfähigkeit und hoher elektrischer Durchschlagfestigkeit stellt die Verbundkeramik Shapal™ dar. Mit der Erfindung wird bei kleineren Spritzern der Effekt der besseren Wärmeableitung und somit des schnelleren Erstarrens der Spritzer erreicht, bevor diese die Oberflächenbeschaffenheit der Keramik durch lokale Überhitzung zerstören und somit eine lokale Verklammerung der Partikel ermöglicht wird.

Um Anhaftungen an dem Düsenring zu vermeiden können zusätzlich mehrere Maßnahmen vorgesehen werden:
Der Düsenring ist mehrteilig ausgeführt und weist teilweise innen eine Antihaft-und/oder Isolierschicht auf.

Der Düsenring ist einteilig ausgeführt und weist teilweise innen und außen eine Antihaft- und/oder Isolierschicht auf.

Der Düsenring ist mehrteilig und weist eine verlängerte Ausgestaltung auf.

Der Düsenring ist einteilig und weist eine verlängerte Ausgestaltung auf.

Der Düsenring ist einteilig als Schutzgasdüse mit Bohrungen mittig in einer Ebene ausgeführt.

Der Düsenring ist einteilig als Schutzgasdüse mit Bohrungen tangential in einer Ebene.

Der Düsenring ist einteilig als Schutzgasdüse mit Bohrungen tangential in mehreren Ebenen.

Der Düsenring ist einteilig als Schutzgasdüse mit Schlitz und Bohrungen tangential in mehreren Ebenen.

Der Düsenring ist mehrteilig als Schutzgasdüse mit Schlitz und tangentialen Labyrinthbohrungen.

Vorteilhaft wird eine Schutzgasströmung eingebracht, um reflektierte und/oder abgelenkte Partikel zu vermeiden und/oder zu entfernen, wobei die Schutzgasströmung um den Spritzstrahl herum kontinuierlich und/oder gepulst erzeugt wird. Zur Erzeugung der Schutzgasströmung können die Prozessgase eingesetzt werden, wobei insbesondere das Sekundärgas als Schutzgas zugeführt werden kann. Möglich ist auch andere Gase als Prozessgase zuzuführen, wie z.B. Luft, Argon oder andere Gase. Die Schutzgasströmung kann durch mittig angeordnete Bohrungen und/oder tangential angeordnete Bohrungen in einer oder mehreren Ebenen des Düsenringes erfolgen. Weiterhin kann zur Stabilisierung der Schutzgasströmung die Strömung durch Schlitzdüsen und/oder Schlitzdüsen mit mittig und/oder tangential angeordneten Bohrungen in einer oder mehreren Ebenen des Düsenringes erfolgen. Weiterhin kann zur Stabilisierung der Schutzgasströmung diese durch Schlitzdüsen mit Labyrinth mit mittig angeordneten Bohrungen/Schlitzen und/oder tangential angeordneten Bohrungen/Schlitzen erfolgen.

Der Düsenisolator ist bevorzugt aus einer Keramik gebildet, wobei eine Hochleistungskeramik verzichtbar, aber selbstverständlich einsetzbar ist, und wirkt elektrisch und thermisch isolierend zwischen dem/der Gehäuse/Kathode und der Sekundärgasdüse. Mit dem Düsenisolator können thermische Spannungen zwischen dem Hauptisolator und der keramischen Sekundärgasdüse vermieden werden. Der Düsenisolator ist ein separates Bauteil, welches aber entfallen kann, wenn dieses in seiner Funktion in den Hauptisolator integriert ist. Als separates Bauteil weist der Düsenisolator eine federringähnliche Ausgestaltung auf. Der Düsenisolator wird bevorzugt in den Hauptisolator eingepasst, so dass im Bereich der Drahtführung ein entsprechender Kreissegmentabschnitt ausgenommen ist.

Der Hauptisolator ist in günstiger Ausgestaltung aus einem Hochtemperaturkunststoff oder aus einer Keramik gebildet und isoliert thermisch und elektrisch zwischen dem/der Gehäuse/Kathode und der/dem Drahtführung/Draht. Der Hauptisolator nimmt die Drahtführung, also deren Komponenten auf, und zentriert diese.

Die Drahtführung weist bevorzugt die Komponenten Drahtführungsblock, Drahtführungsrohr und Drahtführungsschraube auf. Allgemein entsprechen diese Komponenten denen der WO2012/95371, auf welche hiermit auch bezüglich der Einstellbarkeit bzw. Ausrichtbarkeit des Drahtes in die Achse Kathode-Primärgasdüse-Sekundärgasdüse vollumfänglich Bezug genommen wird. Allerdings weist der Drahtführungsblock an seinem Innenumfang eine Vielpunktlagerung, bevorzugt eine Dreipunktlagerung für den Draht auf. Das bedeutet, dass der Draht innerhalb des Drahtführungsblocks in Umfangsrichtung des Drahtes gesehen an vielen, bevorzugt an drei Kontaktstellen Führungskontakt zu dem Inneren des Drahtführungsblocks hat. Jeweils benachbart zu den Kontaktstellen sind Freiräume in den Drahtführungsblock eingebracht, durch welche am Draht anhaftende Schmutzpartikel wegbefördert werden können. Dies ist möglich, da die Rotation und der Drahtvorschub quasi eine gegenläufige Förderspirale erzeugen. In der mehrteiligen Drahtführung ist es durch einen Versatz des Drahtführungsblockes gegenüber der Drahtführungsschraube in Richtung der Kathoden-Düsenachse möglich den Winkel der Drahtführungsachse zur Kathoden-Düsenachse festzulegen bzw. zu verstellen. Die Drahtführungsachse ist dann nicht mehr axial zur Rotationsachse, um welche sich die Vorrichtung dreht und in der sich die Drahtführungsschraube befindet. Zur Festlegung bzw. Einstellung des Partikelstrahlwinkels besteht ferner die Möglichkeit den Winkel der Kathoden-Düsenachse zur Rotationsachse zu ändern.

Das Gehäuse ist wie bereits erwähnt beispielhaft zweiteilig mit einem Hauptelement und einem Deckelelement ausgeführt, was der Wartungsfreundlichkeit zu Gute kommt. Das Gehäuse kann aus Kupfer, einer Kupferlegierung, insbesondere Messing oder aus Aluminium bzw. aus einer Aluminiumlegierung bestehen, wobei die Werkstoffe natürlich nicht beschränkend wirken sollen. In bevorzugter Ausgestaltung wird das Gehäuse wegen der überaus im Betrieb der Vorrichtung vorteilhaften Eigenschaften wie Wärmeausdehnung, Wärmekapazität, Wärmeleitfähigkeit und Oberflächenqualität aus Messing gebildet. Insbesondere die Oberflächenqualität ist für ein zu vermeidendes Anhaften von Overspray und/oder Spritzstäuben entscheidend, weswegen die Oberfläche bevorzugt poliert wird, um die Rauheit zu verringern, was einer Ablagerung an dem Gehäuse entgegen wirkt. Lagern sich dennoch Materialien an dem Gehäuse ab, sind diese leicht entfernbar, wozu ein Luftstrahl bei außer Betrieb befindlicher Vorrichtung ausreichen kann. Natürlich können auch mechanisch angetriebene Bürsten zum Entfernen der Ablagerungen Verwendung finden. Die Oberflächenqualität kann durch geeignete Beschichtungen verbessert werden. In bevorzugter Ausgestaltung ist das Gehäuse überwiegend rund ausgeführt. Lediglich im Bereich der Düsenöffnung, also nur an der Seite des Düsenringes und nur im Bereich des Düsenringes ist die im Querschnitt gesehen kreisrunde Ausgestaltung des Gehäuses aufgehoben. Hier ist das Gehäuse abgeflacht, wobei ein schräger Übergang in eine Ebene übergeht, in welchem der Düsenring bzw. die Düsenöffnung angeordnet ist. Das konsequente Beibehalten des im Querschnitt gesehen kreisrunden Gehäuses vermeidet eine Schaufelwirkung, also eine Mitnahme der in einer Zylinderbohrung befindlichen Prozessgase bzw. Luft, wodurch ein negativer Einfluss der Schaufelwirkung auf die, in Richtung der zu beschichtenden Oberfläche zu transportierenden Partikel erheblich reduziert ist. Diese strömungsoptimierte Oberflächengestalt wirkt sich auch auf verringerte Ablagerungen an dem Gehäuse aus.

Das Deckelelement ist mit dem Hauptelement zu dem Gehäuse verschraubbar, wobei die Sekundärgasführung nur in dem Hauptelement angeordnet ist, und das Gehäuse auf der dem Prozess zugewandten Seite so kühlt (Doppelfunktion des Sekundärgases).

Ein Plasma ist im Sinne der Erfindung ein ionisiertes Gas. Ein Primärgas ist ein Gas oder Gasgemisch zur Erzeugung eines Plasmas durch unterschiedliche Prozesse, wie z.B. durch Spannungsentladung. Das Primärgas kann Argon, Stickstoff, eine Mischung inerter Gase oder eine Mischung der beispielhaften Gase mit Wasserstoff und/oder Helium sein. Das Sekundärgas kann Luft bzw. Druckluft sein. Möglich ist auch, dass als Sekundärgas Argon, Stickstoff oder andere inerte Gase eingesetzt werden. Natürlich sind die genannten Gase lediglich beispielhaft zu verstehen. Zielführend ist aber, dass zumindest das Primärgas ionisierbar ist, so dass ein Lichtbogen zwischen der Kathode und dem Drahtende (Anode) zündbar ist.

Mit der Erfindung wird eine Vorrichtung zum Beschichten von Oberflächen, insbesondere zum Innenbeschichten von Zylinderlaufbahnen mit geringen Durchmessern (<60mm) von Verbrennungsmotoren, zur Verfügung gestellt, welche um ihre Achse rotierbar ist und bei einem als Anode ausgeführten abschmelzenden Eindrahtsystem eine hohe Auftragsrate bei hoher Standzeit und entsprechend reduziertem Wartungsaufwand prozessstabil eben auch kleine Bohrungsdurchmesser innenbeschichten kann (Rotierendes-Eindraht-Lichtbogen-Spritzen). Möglich ist natürlich nicht nur das Abschmelzen einer Volldrahtes, sondern auch das Abschmelzen von Fülldrähten. Die für den prozesssicheren Betrieb notwendigen elektrischen und thermischen Isolierungen liegen innerhalb des sonst metallischen Außengehäuses (auch das bevorzugte Messing wird im Sinne der Erfindung als metallisch bezeichnet) der gesamten Vorrichtung. Nur im Bereich der Partikelstrahlaustrittsöffnung werden elektrische und thermische Isolierungen verwendet. Der Lichtbogen zündet, ohne dass ein Pilotlichtbogen vorhanden sein müsste, direkt zwischen der Kathode und dem Draht, welcher zielführend als Anode geschaltet ist. Die Primärgasdüse ist potentialfrei isoliert, und nicht als Anode geschaltet, so dass an der Primärgasdüse auch kein Lichtbogenansatzpunkt zu erwarten ist, was einer längeren Standzeit der Primärgasdüse zu Gute kommt. Zudem wird vorteilhaft ein Hochspannungslichtbogen erzeugt, welcher direkt auf den Draht bzw. auf dessen Ende zündet. Auch bei höchster Temperatureinwirkung verbleiben Kathode, Düsenbohrung und Draht stets in einer lagestabilen Achse, da sich die Komponenten selbst fixieren und zentrieren, so dass Verlagerungen aufgrund von Wärmespannungen vom Gehäuse zu den Komponenten weitgehend ausgeschlossen sind. Zielführend ist auch, dass die Primärgasdüse sekundärgasgekühlt ist, wobei die Kathode primärgasgekühlt ist. Als keramische Werkstoffe können z.B. Siliziumnitrid, Aluminiumnitrid, Shapal™ oder Macor® Verwendung finden, um nur einige Keramiken oder geeignete Werkstoffe zu nennen.

Dadurch, dass die Primärgasdüse potentialfrei ist, also durch das Zünden des Lichtbogens direkt zwischen der Kathode und dem Draht ist es auch möglich, dass der Brenner, also Vorrichtung zum Beschichten nach dem Beschichten eines Motorblockes, aber insbesondere auch nach dem jeweiligen Beschichten einer jeden von mehreren Bohrungen komplett abgeschaltet werden kann. Würde der Brenner weiter betrieben, also würde der Lichtbogen weiter betrieben, würde so Energie, Prozessgas aber auch Zusatzwerkstoff, also der Draht verbraucht, was bei dem Umsetzen zur nächsten Bohrung oder zum nächsten Motorblock eigentlich gar nicht notwendig wäre. Mit der Erfindung kann also auch ein Einsparungseffekt hinsichtlich der Prozessgase, der Energie und des Zusatzwerkstoffes erzielt werden, wenn der Brenner bei dem Umsetzvorgang zur nächsten Beschichtungsaufgabe abgeschaltet würde. Dies ist möglich, da auf einen Pilotlichtbogen verzichtet werden kann, sodass die Primärgasdüse nicht so beansprucht wird als wenn der Pilotlichtbogen auf dieser anläge. Der Materialverbrauch, der Gasverbrauch und der Energieverbrauch sind so reduzierbar. Möglich ist anstelle einer kompletten Abschaltung des Brenners, natürlich auch eine Teilabschaltung, wobei die Drahtzufuhr und die Energieversorgung unterbrochen würde, wobei die Prozessgase weiter strömen könnten. Dabei ist zielführend, wenn die Prozessgase in ihrem Strömungsbetrag reduziert würden, wodurch aber auch jeden Fall ein Eindringen von Fremdstoffen und/oder Fremdmedien durch das auch reduzierte Aufrechterhalten der Prozessgasströmungen vermeidbar ist.

Die erfindungsgemäße Vorrichtung zum Beschichten dreht sich um ihre eigene Achse, und bewegt sich dabei linear entlang der zu beschichtenden Oberfläche, also beispielsweise in einer Bohrung, also einer Zylinderlaufbahn. Dabei wird das Material schichtweise aufgetragen. Zielführend ist, wenn mehrere übereinander angeordnete Schichten aufgebracht werden, von denen jede Schicht sehr dünn, also zum Beispiel eine Stärke von nur 5µm aufweist. Dies ist mit einer schnell drehenden Vorrichtung möglich, wobei die Ausgestaltung der erfindungsgemäßen Vorrichtung Drehzahlen von 700U/min bis 1000U/min erlaubt. So wird eine Multilayer-Beschichtung erzeugt, deren jede Schicht aufgrund der jeweils dünnen Schichtstärke sehr schnell auskühlt. So bildet sich eine Nanostruktur in der Beschichtung.

Möglich ist, wenn dem zu beschichtenden Bauteil eine Absaugvorrichtung zugeordnet ist, welche z:B. Overspray und Stäube durch Erzeugen einer Absaugströmung beispielsweise in einer zu beschichtenden Zylinderbohrung bei dem Beschichtungsvorgang entfernt, also absaugt. Um den Absaugquerschnitt sowenig wie möglich zu beeinflussen ist es sinnvoll, wenn der in der Bohrung eingebrachte Brenner zusammen mit seinem Verbinder einen gleichbleibenden Querschnitt einnimmt, so dass auch ein gleichförmiges Absaugen möglich ist, was nicht möglich wäre, wenn z.B. der Verbinder im Quer- und/oder Längsschnitt gesehen größer ist als das Gehäuse.

Zielführend bei der Erfindung ist auch, wenn ein Abstand zwischen einem freien Ende des Gehäuses und der Düsenöffnung, durch welche der Spritzstrahl austritt, möglichst gering ist. So kann die Vorrichtung auch Bohrungen vollständig beschichten, welche an ihrem unterem Bereich Widerstandselemente, wie z.B. Lagergassen oder ähnliches Elemente aufweisen. Dadurch, dass die Vorrichtung an ihrem freien Ende eine möglichst kurze Erstreckung hat, kann die Bohrung quasi bis zu dem Widerstandselement beschichtet werden, auch wenn die lineare Bewegung der Vorrichtung eigentlich behindert wäre.

Möglich ist auch, dass der Spritzstrahl nicht nur parallel zur Kathodenachse austritt, sondern geneigt zu dieser. So kann der Spritzstrahl bezogen auf die Kathodenachse abgelenkt werden, indem Druckunterschiede der Prozessgase bezogen auf die Bohrungen in dem Primärgasverteiler und in dem Sekundärgasverteiler eingestellt werden. So kann der Spritzstrahl durch strömungstechnische Maßnahmen auch zum unteren Rand der zu beschichtenden Bohrung abgelenkt werden, um eine Beschichtung sicherzustellen, obwohl ein Beschichten wegen eines Widerstandselementes eigentlich gar nicht möglich wäre. Diese Neigen des Spritzstrahls ist auch hilfreich wenn Übergänge selektiver Einbettzonen (Selective Bore Area Spraying: SBAS) innerhalb der Zylinderlaufbahn beschichtet werden sollen.

Weitere vorteilhafte Einzelheiten und Wirkungen der Erfindung sind im Folgenden anhand von unterschiedlichen, in den Figuren dargestellten Ausführungsbeispielen näher erläutert. Es zeigen:
- Fig. 1: eine Explosionsdarstellung einer Vorrichtung zum thermischen Beschichten einer Oberfläche,
- Fig. 2: einen Teillängsschnitt durch die Vorrichtung,
- Fig. 3: einen Teilquerschnitt durch die Vorrichtung,
- Fig. 4: eine Primärgasdüse als Einzelheit,
- Fig. 5: eine Kathode als Einzelheit,
- Fig. 6: einen Primärgasverteiler als Einzelheit,
- Fig. 7: einen Sekundärgasverteiler als Einzelheit,
- Fig. 8: eine Sekundärgasdüse als Einzelheit,
- Fig. 9: einen Düsenring als Einzelheit, in erster Ausgestaltung
- Fig. 9a: einen Düsenring als Einzelheit, in zweiter Ausgestaltung
- Fig. 10: einen Düsenisolator als Einzelheit,
- Fig. 11: einen Hauptisolator als Einzelheit,
- Fig. 12: eine Aufsicht auf einen Längsschnitt aus Figur 2,
- Fig. 13: einen Drahtführungsblock als Einzelheit, zum einen perspektivisch und zum anderen in einem Querschnitt,
- Fig. 14: eine Aufsicht auf ein Sekundärgaslabyrinth,
- Fig. 15 - 17: mögliche Ausgestaltungen für eine Antihaftbeschichtung, und
- Fig. 18 - 22: mögliche Ausführungen für eine Schutzgasströmung.

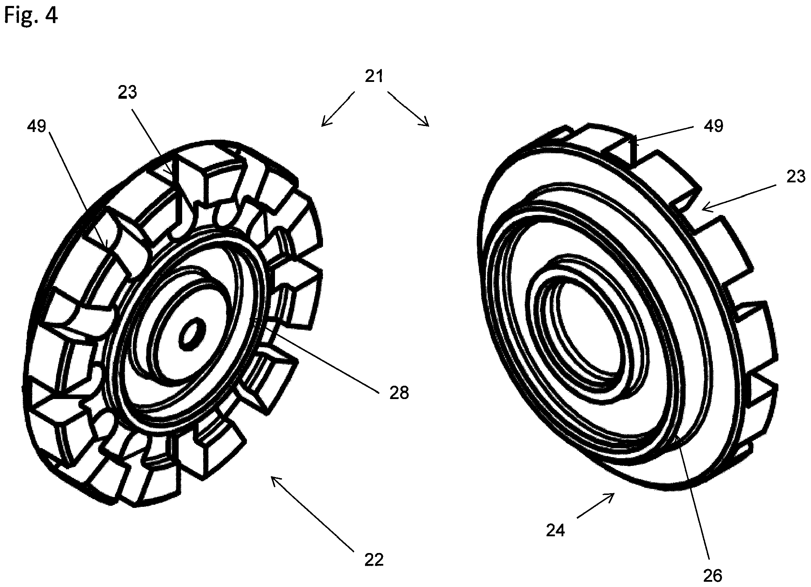

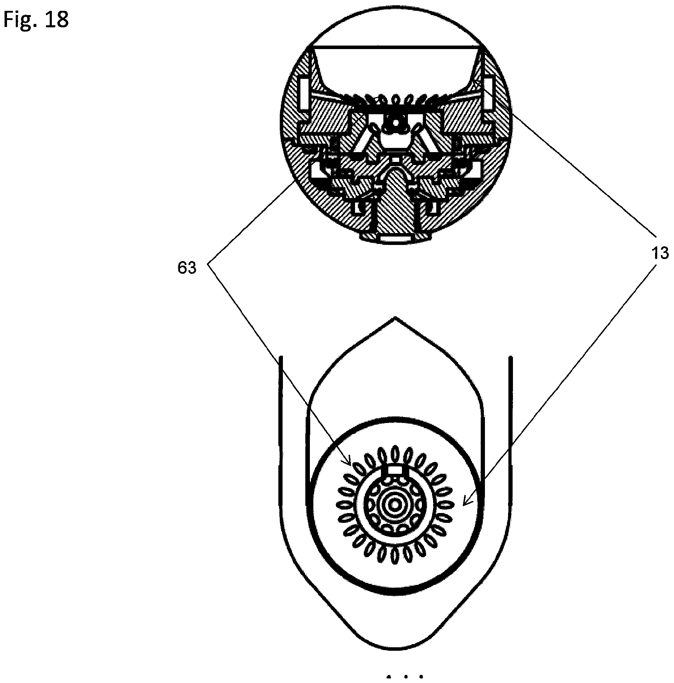

In den unterschiedlichen Figuren sind gleiche Teile stets mit denselben Bezugszeichen versehen, so dass diese in der Regel auch nur einmal beschrieben werden. In den Figuren 4 bis 11 sind die dortigen Komponenten jeweils von beiden Seiten, also von einer Unterseite und von einer Oberseite her perspektivisch dargestellt. In den Figuren 18 bis 22 sind jeweils ein Querschnitt und eine Draufsicht dargestellt.

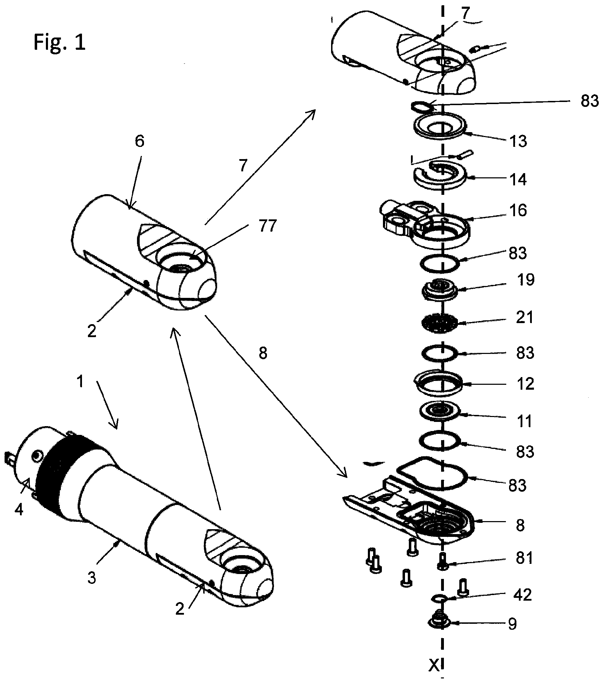

Figur 1 zeigt eine Vorrichtung 1 zum thermischen Beschichten einer Oberfläche. Die Vorrichtung 1 kann auch als Brenner 1 bezeichnet werden, welcher zum thermischen Beschichten einer Zylinderbohrung auch kleinerer Durchmesser von weniger als 60mm geeignet ist. Dazu wird in der Vorrichtung 1 ein Lichtbogen gezündet, welcher den Spritzzusatzwerkstoff aufschmilzt, wobei aufgeschmolzenes Material zur zu beschichtenden Oberfläche transportiert wird. Dazu werden zwei Gase nämlich Primärgas und Sekundärgas eingesetzt. Das Primärgas hat die Aufgabe, den Lichtbogen aufrecht zu erhalten bzw. zu tragen, wobei das Primärgas zusätzlich noch Kühlfunktionen hat, wobei auch das Sekundärgas eine Doppelfunktion hat. Zum einen soll das Sekundärgas den Transport der aufgeschmolzenen Partikel unterstützen und die Partikel weiter zerstäuben und beschleunigen. Zum anderen hat das Sekundärgas eine Kühlfunktion, worauf noch eingegangen wird. Das Primärgas kann Argon, Stickstoff, eine Mischung inerter Gase oder eine Mischung der beispielhaften Gase mit Wasserstoff und/oder Helium sein. Das Sekundärgas kann Luft bzw. Druckluft sein. Möglich ist auch, dass als Sekundärgas Argon, Stickstoff oder andere inerte Gase eingesetzt werden. Die beispielhaft genannten Gase sollen natürlich nicht beschränkend sein.

Die Vorrichtung 1 kann einen Kopfteil 2, beispielhaft einen Verbinder 3 als Zwischenteil und einen Adapter 4 als Anschlussteil aufweisen, wobei Primärgasanschlüsse, Sekundärgasanschlüsse, Stromquellenanschlüsse, Steuer- und Kontrollvorrichtungen sowie ein Draht in Figur 1 nicht gezeigt sind. Zum Beschichten einer Zylinderbohrung rotiert die Vorrichtung um sich selbst und wird dabei linear hin- und her bewegt. Selbstverständlich kann anstelle der linearen Bewegung der Vorrichtung auch eine lineare Bewegung des zu beschichtenden Bauteils erfolgen. Selbiges gilt natürlich auch für die Rotationsbewegung, sofern sinnvoll.

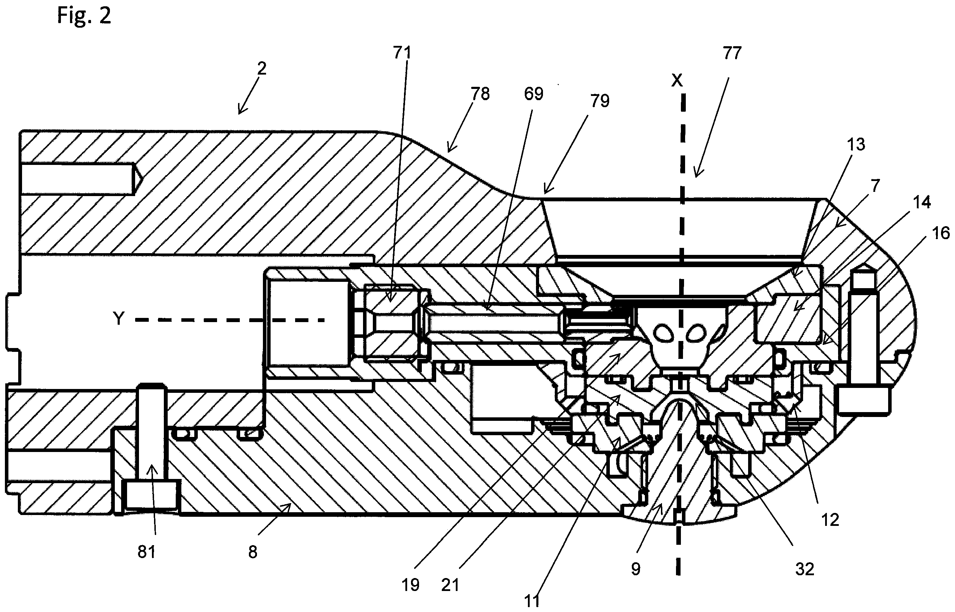

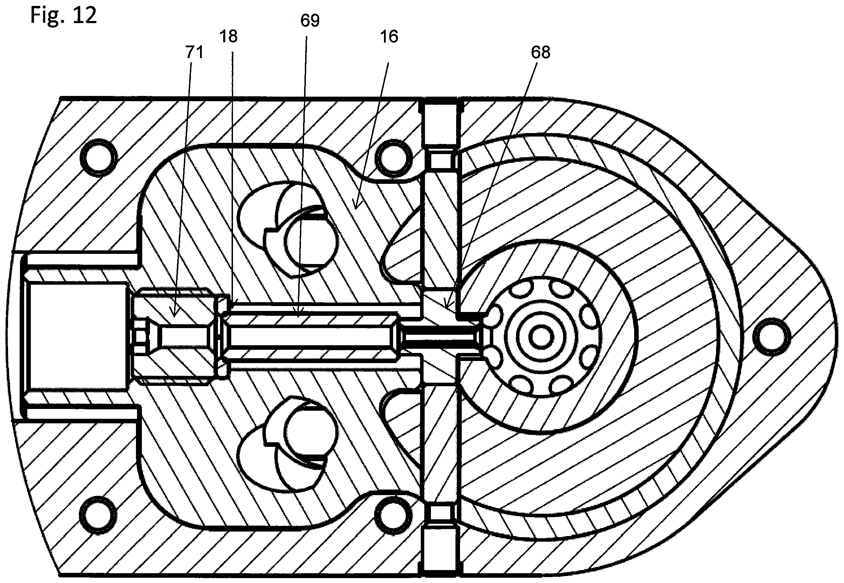

Die Vorrichtung 1 zum thermischen Beschichten einer Oberfläche, umfasst wie beispielhaft dargestellt ein zweiteiliges Gehäuse 6 mit einem Hauptelement 7 und einem Deckelelement 8, eine Kathode 9, einen Primärgasverteiler 11, einen Sekundärgasverteiler 12, elektrisch und thermisch wirkende Isolationselemente 13,14, und 16, sowie eine Anode, welche als abschmelzender Draht ausgebildet über eine Drahtführung 18 (Figuren 2 und 12) in eine Sekundärgasdüse 19 geführt wird, wobei eine Primärgasdüse 21 unter Parallelschaltung des Sekundärgasverteilers 12 an dem Primärgasverteiler 11 zentriert montiert ist, und an ihrer zur Sekundärgasdüse 19 orientierten Seite 22 in einer Ebene radial angeordnete Öffnungen, also Bohrungen oder Schlitze 23 (Figur 4) aufweist.

Die Primärgasdüse 21 (Figur 4) weist beispielhaft eine zylindrische Außenform auf, wobei an der zum Primärgasverteiler 11 orientierten Seite 24 Eingreifelemente 26 zum Eingreifen in korrespondierende Vertiefungen 27 des Primärgasverteilers 11 angeordnet sind, so dass jedenfalls die zentrierte Montage beider Komponenten zueinander erreicht wird. Die Eingreifelemente 26 sind beispielhaft als kreisringartige Stege ausgeführt, wobei die Vertiefungen 27 dazu korrespondierend kreisringartig ausgeführt sein können. Das Eingreifelement 26 der Primärgasdüse 21 legt sich mit seinem Innenumfang an einen Außenumfang der Vertiefung 27 des Primärgasverteilers 11 an. So ist eine keramikgerechte Konstruktion erstellt, bei welcher das Element mit dem höheren Wärmeausdehnungskoeffizienten (hier metallische (Kupfermantel) Primärgasdüse 21) um das Element mit dem niedrigeren Wärmeausdehnungskoeffizienten (hier keramischer Primärgasverteiler 11) angeordnet wird. Auf diese Art und Weise entstehen in der Keramik immer nur Druckspannungen. Die innere kreisringförmige Erhebung dient ausschließlich dem UV- und Wärmestrahlungsschutz des Primärgasverteilers 11. An der zur Sekundärgasdüse 19 orientierten Seite 22 der Primärgasdüse 21 sind ebenfalls Zentrierelemente 28 vorgesehen, welche mit einem korrespondierenden Gegenzentrierelement 29 der Sekundärgasdüse 19, die an deren zur Primärgasdüse 21 orientierten Seite 31 angeordnet sind, zusammenwirken. Das Gegenzentrierelement 29 der Sekundärgasdüse 19 ist als kreisringförmige Erhebung ausgeführt, welche sich zwischen den als kreisringartigen Stegen ausgeführten Zentrierelementen 28 der Primärgasdüse 21 einlegt. Das äußere Zentrierelement 28 der Primärgasdüse 21 legt sich mit seinem Innenumfang an einen Außenumfang des Zentrierelementes 29 der Sekundärgasdüse an. Die Primärgasdüse 21 kann natürlich auch aus einer Keramik sein, wobei die Ausgestaltung wie beschrieben ist.

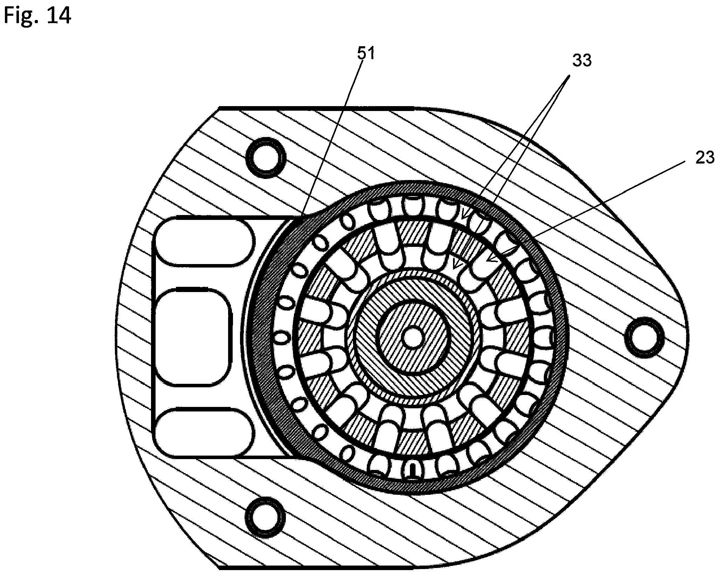

Durch die Anordnung der Öffnungen, also der Schlitze 23 in einer gemeinsamen Radialebene wird in Verbindung mit der Sekundärgasdüse 19 ein Sekundärgaslabyrinth 33 (Figur 14) gebildet, so dass das Sekundärgas zur Kühlung der Primärgasdüse 21 herangezogen werden kann

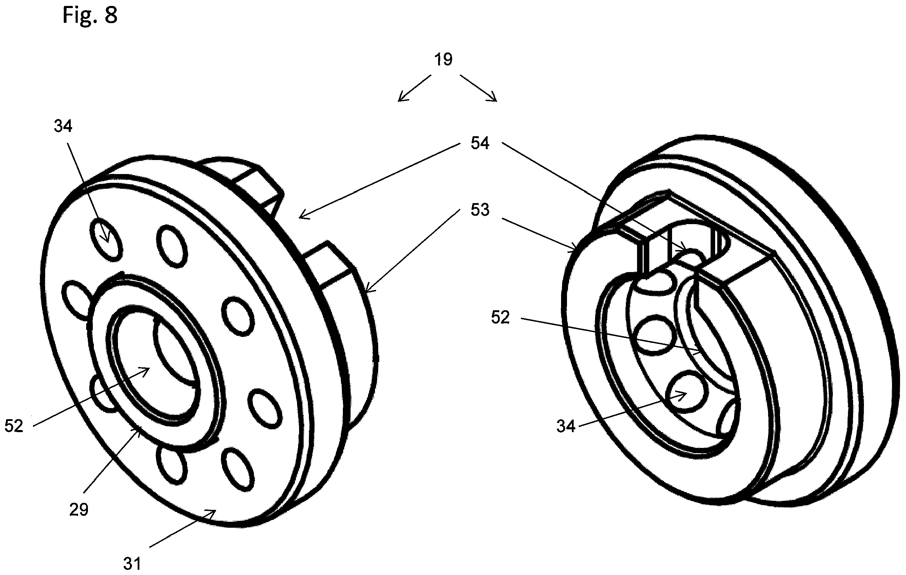

Um die günstige Kühlung der Primärgasdüse 21 mit Sekundärgas erreichen zu können, wird vorteilhaft vorgeschlagen, dass die Schlitzanzahl der radialen Öffnungen, also Schlitze 23 symmetrisch größer als eine Sekundärgasbohrungsanzahl von Sekundärgasbohrungen 34 in der Sekundärgasdüse 19 (Figur 8) ist. Beispielsweise können in der Primärgasdüse 21 zwölf radiale, in einer Ebene angeordnete Schlitze 23 vorgesehen sein, so dass in der Sekundärgasdüse 19 nur acht Sekundärgasbohrungen 34 angeordnet sein könnten. Wären zehn Schlitze 23 vorgesehen, sind beispielhaft sechs Sekundärgasbohrungen 34 möglich. Zur Verteilung der Strömungen von den Öffnungen, also von den Schlitzen 23 der Primärgasdüse 21 in die Bohrungen der Sekundärgasdüse 19 kann als weiterer Teil des Labyrinthes in der Primär- und/oder Sekundärgasdüse eine kreisringförmige Nut integriert werden, deren Innen- und Außendurchmesser vorteilhaft den sich ergebenden Durchmessern der Sekundärgasbohrungen in der Öffnungsebene, also in der Schlitzebene entspricht. Grundsätzlich ist die Primärgasdüse 21 im Primärgasverteiler 11 zentriert, und zentriert die Sekundärgasdüse 19.

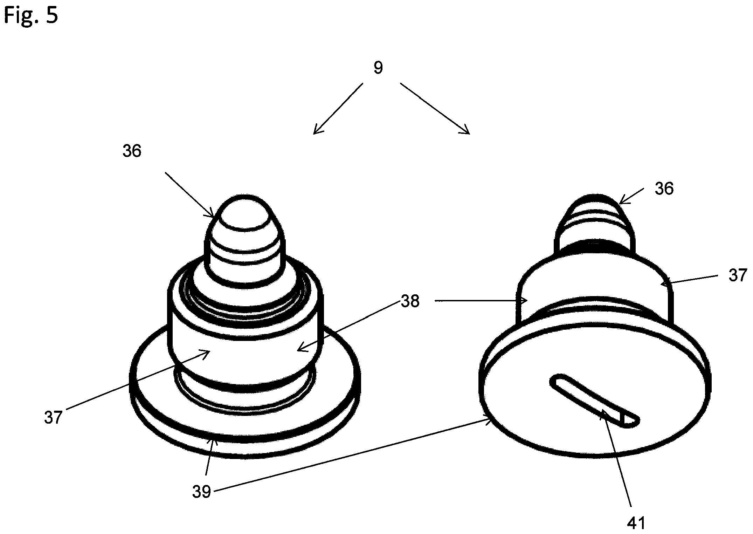

Beispielhaft ist die Kathode 9 (Figur 5) aus zwei Werkstoffen gebildet, wobei ein bevorzugt wolframlegierter Kern 36 vorzugsweise mit Kupfer umgossen ist, so dass ein Kupfermantel 37 gebildet ist.

Die Kathode 9 ist an ihrem bevorzugt wolframlegierten Kern 36 fingerförmig ausgeführt, was in Verbindung mit einem konvergenten Einlaufgebiet der Primärgasdüse 21 zu einer geringen Lichtbogeneinschnürung führt, wobei eine hilfreiche Temperaturverteilung im Lichtbogenansatzpunkt erreichbar ist, was wiederum günstig für die Standzeit der Kathode 9 ist. Hilfreich ist auch, wenn die Primärgasdüse 21 ein zentriert zur Kathode konvergentes oder ein divergent konvergentes Einlaufgebiet des Primärgases aufweist, so dass eine Verringerung von Verwirbelungen des Primärgases erreicht wird, um eine weniger turbulente Primärgasströmung zu erreichen.

Der umgossene Kupfermantel 37 ist beispielhaft hutartig mit einem Hülsenabschnitt 38 und einem daran angeformten Flanschabschnitt 39 ausgeführt. In dem Hülsenabschnitt 38 ist der fingerförmige, bevorzugt wolframlegierte Kern 36 aufgenommen. Der fingerförmige Kern 36 zeichnet sich dadurch aus, dass dieser den Hülsenabschnitt 38 mit seiner bevorzugt verrundeten Spitze überragt. Möglich ist auch noch im Spitzenbereich des fingerförmigen Kernes 36 zumindest eine umlaufende Nut einzubringen. An dem Außenumfang des Hülsenabschnittes 38 ist ein Außengewinde angeordnet, welches mit einem korrespondierenden Innengewinde des Deckelelementes 8 des Gehäuses 6 zusammenwirkt. Hier liegt ein weiterer Vorteil der Erfindung, bei welcher die Kathode 9 in das Gehäuse 6, also in das Deckelelement 8 einschraubbar ist. Damit ist die Kathode 9 über den Gewindeabschnitt und mittels des Flansches 39 vorteilhaft zentriert innerhalb des Gehäuses 6 angeordnet, und verbleibt auch in dieser zentrierten Position trotz der erheblichen Wärmeeinwirkung während des Betriebes. Die Kathode 9 ist also vorteilhaft kraftformschlüssig mit dem Gehäuse 6 verbindbar, wobei eine einfache kraftschlüssige Lagerung der Kathode 9 innerhalb des Gehäuses 6 vermieden ist, so dass die Wärmeeinwirkung keine schädlichen Einflüsse auf ein ungewolltes Lösen der Schraubverbindung hat, wobei auch schädliche Wärmespannungen keinen Einfluss auf eine mögliche Verlagerung der Kathode 9 mehr haben. Der Flanschabschnitt 39 kann eine außenliegende Schlüsselfläche 41 aufweisen, um die Kathode 9 in das Gehäuse 6 einzuschrauben und wieder zu lösen. Die Schlüsselfläche kann wie dargestellt als Schlitz für einen einfachen Schraubendreher ausgeführt sein. Möglich sind aber auch Schlüsselflächen, als Kreuzschlitz, für Torx-Drehwerkzeuge oder ähnliche Drehwerkzeuge auszuführen. Möglich ist auch eine umfangsmäßige Schlüsselfläche in der Ausgestaltung als Sechskant zum Angreifen eines Maul- oder Ringwerkzeuges an dem Flanschabschnitt 39 vorzusehen. Zielführend ist, wenn die Schlüsselfläche 41 außenliegend angeordnet ist, also von außerhalb des Gehäuses 6 zugänglich ist. Die Kathode 9 kann so einfach durch Herausschrauben inspiziert und/oder ausgetauscht werden, ohne dass das gesamte Gehäuse geöffnet werden muss.

Eine Abdichtung der Kathode 9 zum äußeren Gehäuse 6 kann mittels eines O-Rings 42 (Figur 1) zwischen Flansch 39 und Deckelelement 8 erreicht werden.

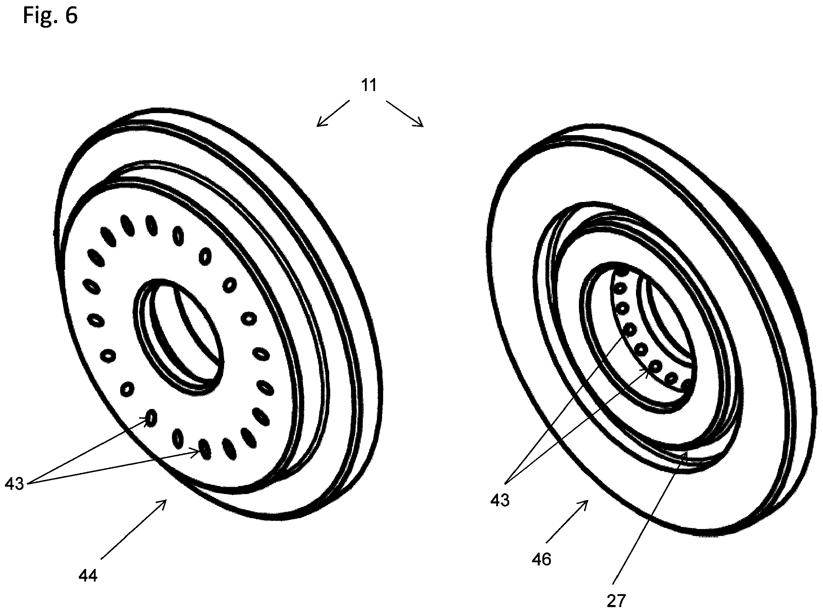

Beispielhaft ist der Primärgasverteiler 11 (Figur 6) aus einer Keramik gebildet, und wirkt so zusätzlich zu seiner eigentlichen Gasverteilungsfunktion auch als thermischer und elektrischer Isolator zwischen dem Gehäuse 6, der Kathode 9 und der Primärgasdüse 21. Der Primärgasverteiler 11 weist in bevorzugter Ausführung konvergent und/oder konzentrisch angeordnete Bohrungen 43 auf, welche sich von einer Unterseite 44 zu einer zur Primärgasdüse 21 orientierten Seite 46 erstrecken. So ist eine homogene Gasverteilung bei gleichzeitiger Kathodenkühlung mittels des Primärgases möglich. Mit der zielführenden Anordnung und Ausführung der Bohrungen sind Verwirbelungen des Primärgases vermeidbar, was sich wiederum positiv auf eine verringerte Kathodentemperatur und geringeren Kathodenverschleiß bezogen auf verwirbeltes Primärgas auswirkt. Günstig ist, wenn eine hohe Anzahl an Bohrungen 43 in dem Primärgasverteiler 11 angeordnet sind, wobei so viel Bohrungen 43 vorgesehen sein können, dass der Primärgasverteiler 11 quasi als Membran ausgeführt werden kann.

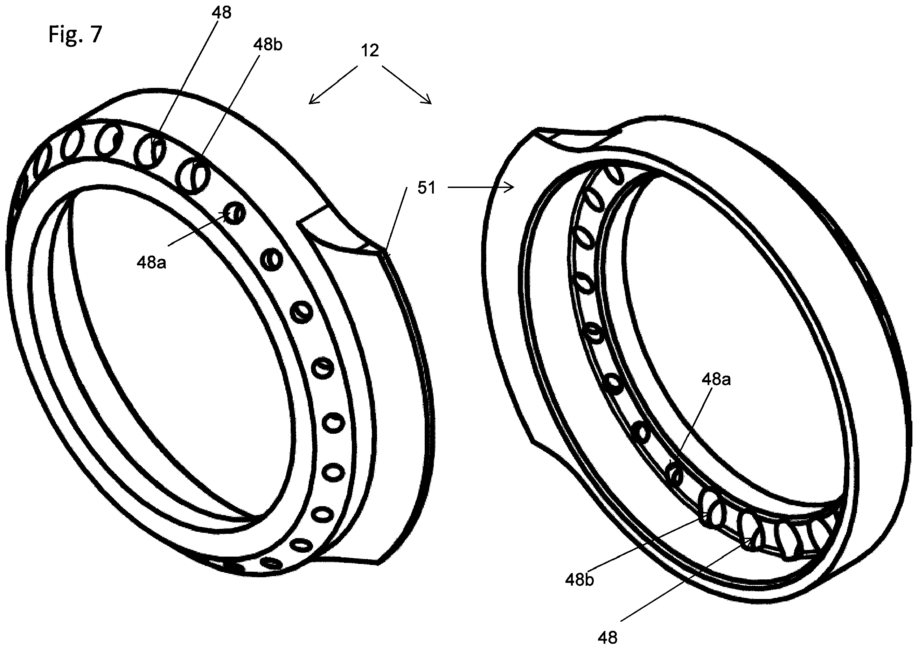

Beispielhaft weist der Sekundärgasverteiler 12 (Figur 7) konvergent und/oder konzentrisch angeordnete Bohrungen 48 mit unterschiedlichen Bohrungsdurchmessern auf, welche so einen Ausgleich der Sekundärgasströme innerhalb des Gehäuses 6 bewirken können. Die Bohrungen 48 im Sekundärgasverteiler 12 weisen, wie erkennbar, in Umfangsrichtung gesehen unterschiedliche, also ab- und zunehmende Durchmesser auf, wobei beispielhaft zwei unterschiedliche Bohrungsdurchmesser, also ein kleinerer 48a und ein größerer Bohrungsdurchmesser 48b vorgesehen sind, so dass Reihen von Bohrungen mit jeweils gleichem Durchmesser gebildet sind, wobei die Endbohrungen der jeweiligen Reihe großer Bohrungsdurchmesser zu den Endbohrungen der jeweils anderen Reihe kleinerer Bohrungsdurchmesser benachbart sind. Die Bohrungen 48 bewirken eine günstige Verteilung des Sekundärgases. Die Bohrungsanzahl ist bevorzugt so bemessen, dass diese größer ist als die Anzahl der Schlitze 23 in der Primärgasdüse 21. In Zusammenwirken mit der Primärgasdüse 21 wird so quasi ein weiteres Sekundärgaslabyrinth 33 (Figur 14) gebildet, so dass die Primärgasdüse 21 auch außen gut gekühlt wird. Wie beispielhaft erkennbar, weist der Sekundärgasverteiler 12 eine Montagehilfe 51 auf, so dass die Bohrungen 48 in ihrem Durchmesser gezielt und dem gewünschten Effekt (s.o.) entsprechend orientiert werden können. Die Montagehilfe 51 ist beispielhaft als Fortsatz ausgeführt, so dass der Sekundärgasverteiler 12 quasi ähnlich einer Kappe mit Schild ausgeführt ist, was natürlich nur beispielhaft sein soll.

Auch die Sekundärgasdüse 19 (Figur 8) ist aus einer Keramik gebildet und isoliert thermisch und elektrisch das Gehäuse 6, die Kathode 9, die Drahtführung 18, aber auch den Draht. Die Sekundärgasdüse 19 weist eine zur Primärgasdüse 21 angeordnete Seite 31 und gegenüberliegend dazu einen, eine zentrale Öffnung 52 umgebenden Wandabschnitt 53 auf, in welchem eine einzige Ausnehmung 54 für den Draht eingebracht ist. Die Sekundärgasdüse 19 weist bevorzugt konvergent und/oder konzentrisch angeordnete Bohrungen 34 auf, so dass das Sekundärgas einen Druckkegel bildet. Die Bohrungsanordnung ist dabei günstiger Weise symmetrisch zur Drahtförderachse Y, welche beispielhaft senkrecht zur Kathodenachse X (Figur 2) ist, wobei natürlich auch andere Anordnungen möglich sind. In vorteilhafter Ausführung bilden die Bohrungsachsen einen theoretischen Zerstäubungspunkt, wobei allerdings der zuvor genannte Druckkegel erzeugt wird. Das bedeutet, dass sich die durch die jeweiligen Bohrung 34 ausströmenden Sekundärgassäulen entgegen dem theoretischen Zerstäubungspunkt der Bohrungsachsen nicht schneiden, sondern quasi einen das Primärgas einhüllenden Druckkegel bilden. Die Innenform der Sekundärgasdüse 19 stellt im Bereich der der Primärgasdüse 21 zugewandten Seite eine Verlängerung der Innenkontur der Primärgasdüse 21 dar. Die Bildung eines Druckkegels wird somit durch das zentral strömende Primärgas zusätzlich unterstützt.

Erkennbar ist weiter, dass die Sekundärgasdüse 19, insbesondere deren Wandabschnitt 53 in Förderrichtung nur eine einzige Einlauföffnung (Ausnehmung 54) aufweist, gegenüberliegend dazu aber geschlossen ist, so dass der Draht nicht aus der Vorrichtung 1 heraus transportiert werden kann. Neben der Begünstigung einer gleichmäßigen Druckkegelausbildung kann auf diese Art die Steuer- und Kontrolleinrichtung des Drahtvorschubes durch Unregelmäßigkeiten in der Drahtvorschubgeschwindigkeit, beispielhaft im Falle eines nicht komplett abgeschmolzenen Drahtes, eventuelle Prozessstörungen erkennen. Die Sekundärgasdüse 19 ist durch geeignete Mittel 29 und 28 durch die Primärgasdüse 21 zentriert, wobei die Sekundärgasdüse 19 so ausgeführt werden kann, dass thermische Spannungen durch zusätzliche Isolationselemente 13,14,16, beispielsweise durch einen Hauptisolator 16 bzw. einen separaten Düsenisolator 14 vermieden sind.

Insgesamt ergibt sich eine vorgegebene Montagereihenfolge (Figuren 1 bis 3), wobei die Kathode 9 durch Einschrauben, bevorzugt in dem Deckelelement 8 des Gehäuses 6 zentriert wird, und wobei das Gehäuse 6, beispielsweise das Deckelelement 6, den Primärgasverteiler 11 zentriert. Die Primärgasdüse 21 ist an dem Primärgasverteiler 11 zentriert und zentriert die Sekundärgasdüse 19. Dies ist dahin vorteilhaft, dass eine gemeinsame Mittelachse X (Kathodenachse X) gebildet ist, wobei sich zumindest die Komponenten 9,11,12,21,19 trotz der erheblichen thermischen Einflüsse aufgrund von Wärmespannungen nicht verlagern.

Zielführend ist, wenn die Isolationselemente beispielhaft durch mehrere Komponenten als Düsenring 13, Düsenisolator 14 und als Hauptisolator 16 ausgeführt sind.

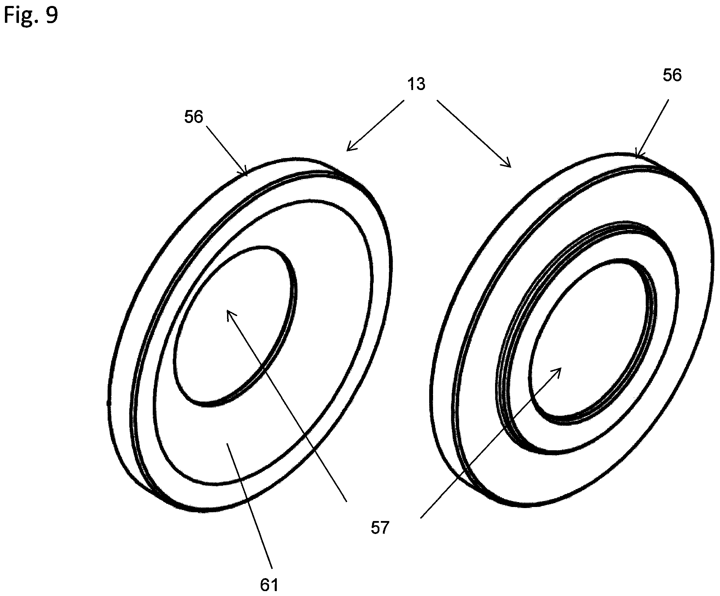

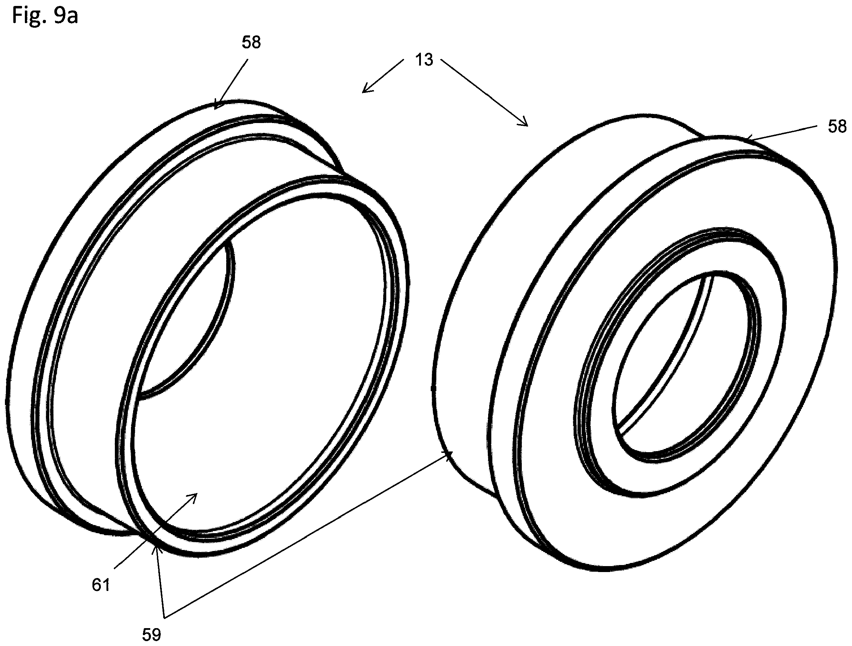

Der Düsenring 13 (Figur 9) ist aus einer Keramik, bevorzugt aus einer Hochleistungskeramik gebildet und wirkt elektrisch und thermisch isolierend zwischen dem Gehäuse 6 und der Drahtführung 18. Der Düsenring 13 ist der einzige, äußere Isolator in der sonst metallischen äußeren Form der gesamten Vorrichtung bzw. des Gehäuses 6. In möglicher Ausgestaltung ist der Düsenring 13 trichterförmig ausgebildet und erstreckt sich von einem Außenring 56 in Richtung zu einer zentralen Öffnung 57 (Figur 9). Möglich ist auch, den Düsenring 13 hülsenartig (Figur 9a) mit einem sich von einem Fußflansch 58 wegerstreckenden Wandabschnitt 59 auszuführen, so dass ein Düsenring 13 in verlängerter Ausgestaltung gebildet ist. In bevorzugter Ausgestaltung ist der Düsenring 13 zumindest an seiner von der Kathode 9 wegorientierten Außenoberfläche 61 poliert, bevorzugt hochglanzpoliert, um Anhaftungen zu vermeiden. Der Düsenring 13 kann einteilig oder mehrteilig sein, wobei bevorzugt Keramiken bzw. Werkstoffe wie z.B. Siliziumnitrid, Aluminiumnitrid, Bornitrid, Zirkonoxid, Aluminiumoxid, ATZ oder ZTA zum Herstellen des Düsenrings verwendet werden können.

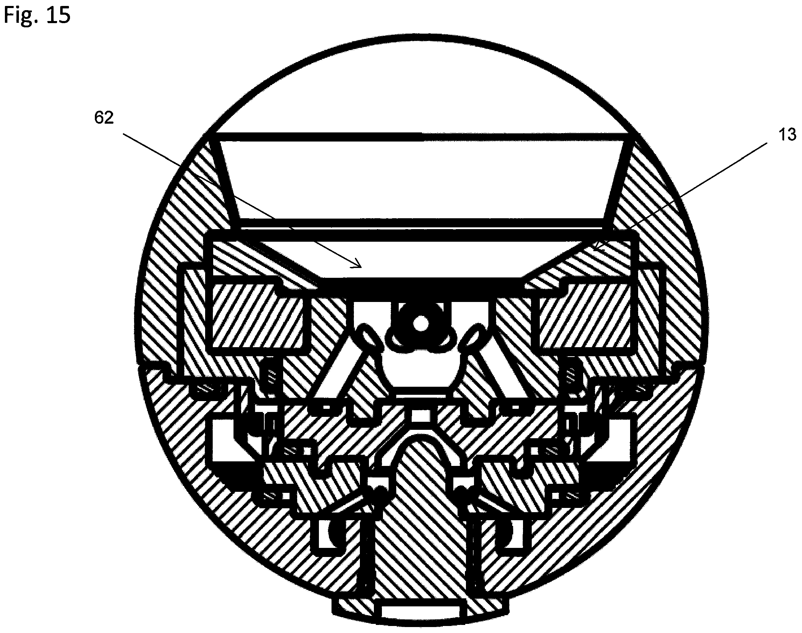

Um Anhaftungen an dem Düsenring 13 zu vermeiden können mehrere Maßnahmen vorgesehen werden:
Der Düsenring 13 ist mehrteilig ausgeführt und weist teilweise innen eine Antihaft-und/oder Isolierschicht 62 auf (Figur 15).

Der Düsenring 13 ist einteilig ausgeführt und weist teilweise innen und außen eine Antihaft- und/oder Isolierschicht 62 auf.

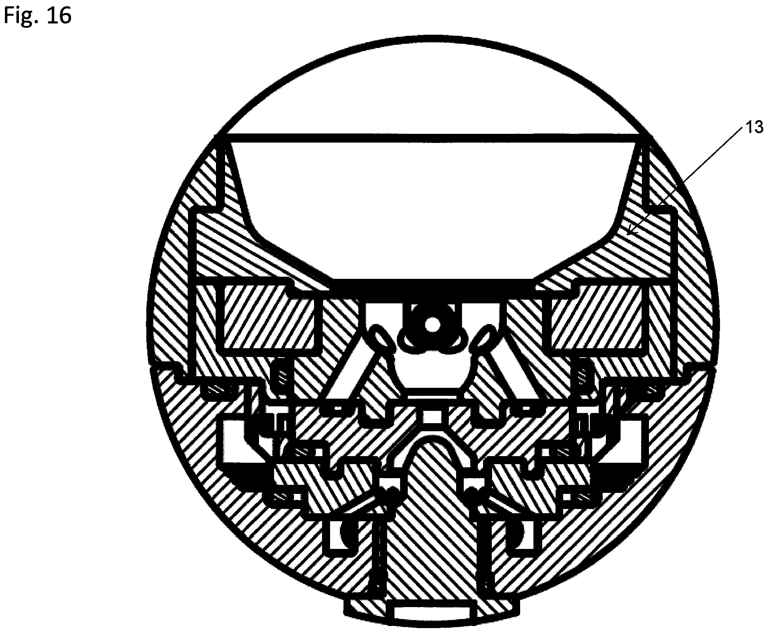

Der Düsenring 13 ist mehrteilig und weist eine verlängerte Ausgestaltung auf (Figur 16).

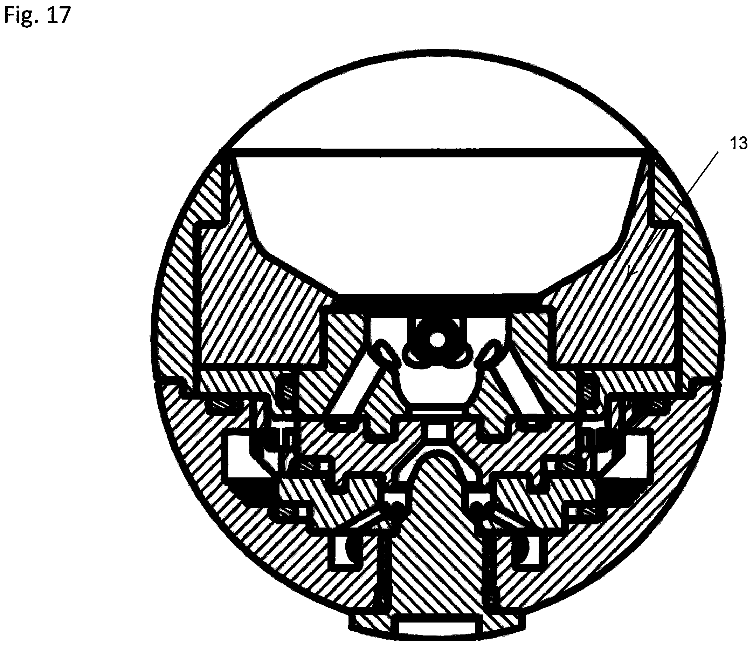

Der Düsenring 13 ist einteilig und weist eine verlängerte Ausgestaltung auf (Figur 17).

Der Düsenring 13 ist einteilig als Schutzgasdüse mit Bohrungen 63 mittig in einer Ebene ausgeführt (Figur 18).

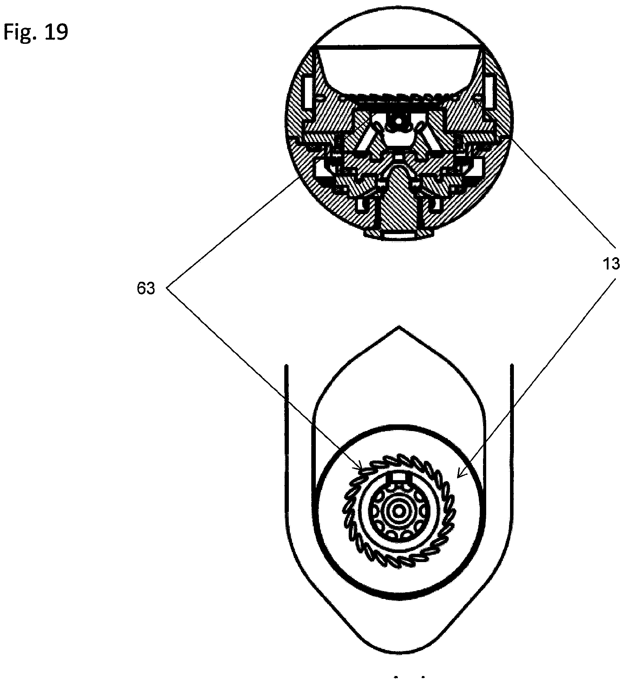

Der Düsenring 13 ist einteilig als Schutzgasdüse mit Bohrungen 63 tangential in einer Ebene (Figur 19).

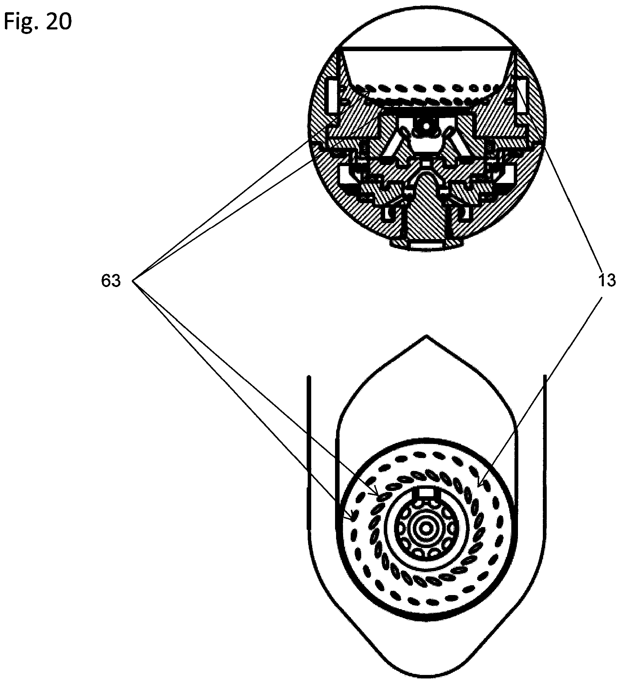

Der Düsenring 13 ist einteilig als Schutzgasdüse mit Bohrungen 63 tangential in mehreren Ebenen (Figur 20).

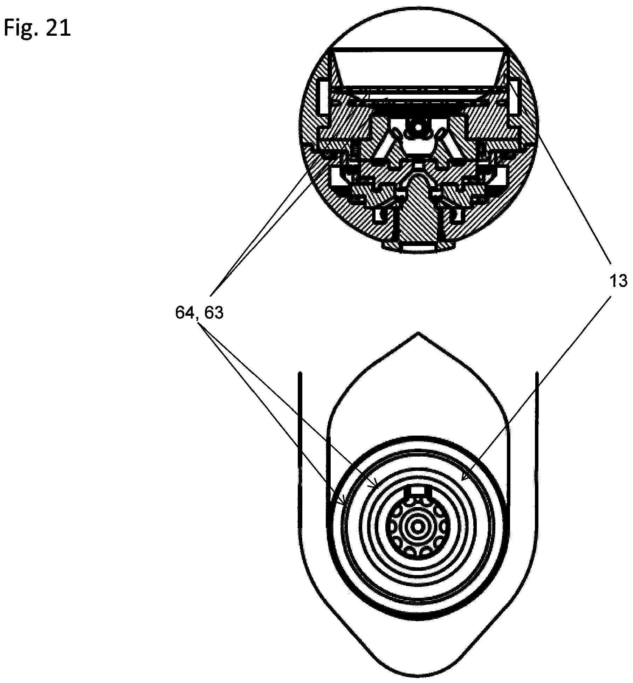

Der Düsenring 13 ist einteilig als Schutzgasdüse mit Schlitz 64 und Bohrungen 63 tangential in mehreren Ebenen (Figur 21).

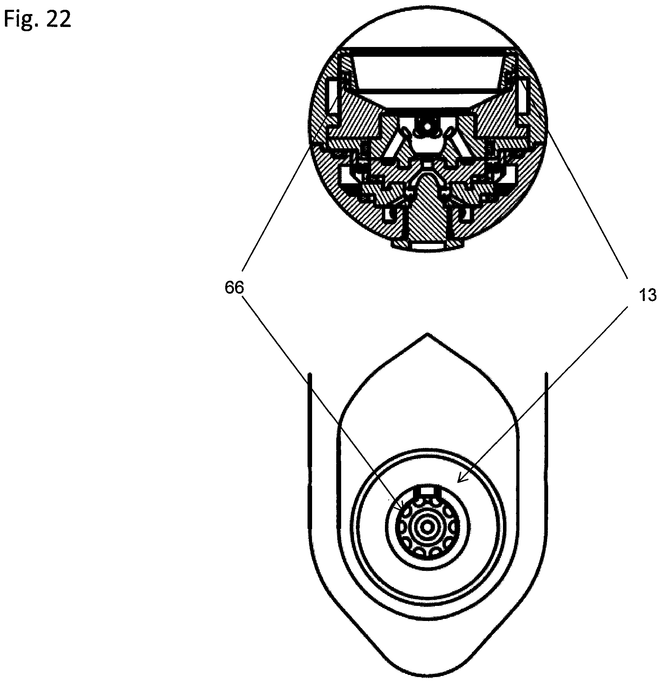

Der Düsenring 13 ist mehrteilig als Schutzgasdüse mit Schlitz 64 und tangentialen Labyrinthbohrungen 66 (Figur 22).

Vorteilhaft wird eine Schutzgasströmung in die Düsenöffnung 77 eingebracht, um reflektierte und/oder abgelenkte Partikel zu vermeiden und/oder zu entfernen, wobei die Schutzgasströmung um den Spritzstrahl herum kontinuierlich und/oder gepulst erzeugt wird. Die Düsenöffnung 77 ist in dem abgeflachten Teil des Gehäuses 6, also seines Hauptelementes 7 angeordnet und wird auch durch die Oberfläche 61 des Düsenringes 13 definiert. Der Spritzstrahl tritt aus der Düsenöffnung 77 aus..Zur Erzeugung der Schutzgasströmung können die Prozessgase eingesetzt werden, die lediglich abgezweigt werden müssen, wobei insbesondere das Sekundärgas als Schutzgas zugeführt werden kann. Möglich ist auch andere Gase als Prozessgase zuzuführen, wie z.B. Luft, Argon oder andere Gase Die Schutzgasströmung kann durch mittig angeordnete Bohrungen 63 und/oder tangential angeordnete Bohrungen 63 in einer oder mehreren Ebenen erfolgen. Weiterhin kann zur Stabilisierung der Schutzgasströmung die Strömung durch Schlitzdüsen 64 und/oder Schlitzdüsen 64 mit mittig und/oder tangential angeordneten Bohrungen 63 in einer oder mehreren Ebenen erfolgen. Weiterhin kann zur Stabilisierung der Schutzgasströmung diese durch Schlitzdüsen 64 mit Labyrinth 66 mit mittig angeordneten Bohrungen/Schlitzen 63/64 und/oder tangential angeordneten Bohrungen/Schlitzen 63/64 erfolgen. Das Schutzgas bewirkt quasi einen Schutzschild zum Schutz der Oberfläche 61, welcher die Oberfläche 61 des Düsenringes 13 also der Düsenöffnung 77 vor der Ablagerung der besagten Partikeln schützt.

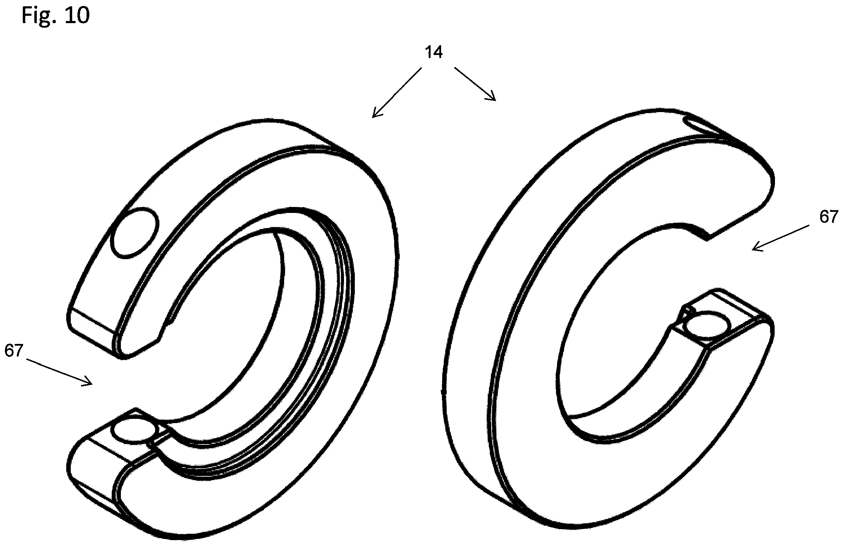

Der Düsenisolator 14 (Figur 10) ist bevorzugt aus einer Keramik gebildet, wobei eine Hochleistungskeramik verzichtbar, aber selbstverständlich einsetzbar ist, und wirkt elektrisch und thermisch isolierend zwischen dem/der Gehäuse 6/Kathode 9 und der Sekundärgasdüse 19. Der Düsenisolator 14 ist ein separates Bauteil, welches aber entfallen kann, wenn dieses in seiner Funktion in den Hauptisolator 16 integriert ist. Als separates Bauteil weist der Düsenisolator 14 eine federringähnliche Ausgestaltung auf. Der Düsenisolator 14 wird in den Hauptisolator 16 eingepasst (Figur 12), wobei im Bereich der Drahtführung 18 ein entsprechender Kreissegmentabschnitt 67 ausgenommen ist.

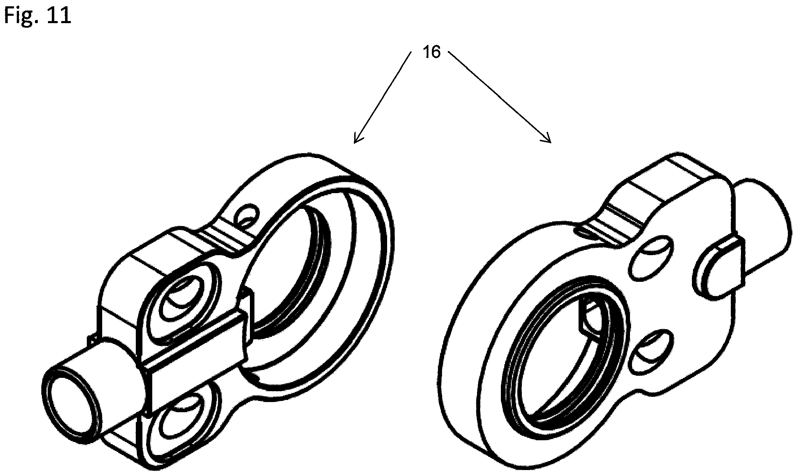

Der Hauptisolator 16 (Figur 11) ist in günstiger Ausgestaltung aus einem Hochtemperaturkunststoff oder aus einer Keramik gebildet und isoliert thermisch und elektrisch zwischen dem/der Gehäuse 6/Kathode 9 und der/dem Drahtführung 18/Draht 19. Der Hauptisolator 19 nimmt die Drahtführung 18, also deren Komponenten auf, und zentriert diese. Der Düsenisolator 14 ist den Hauptisolator einlegbar, wie Figur 12 beispielhaft zeigt.

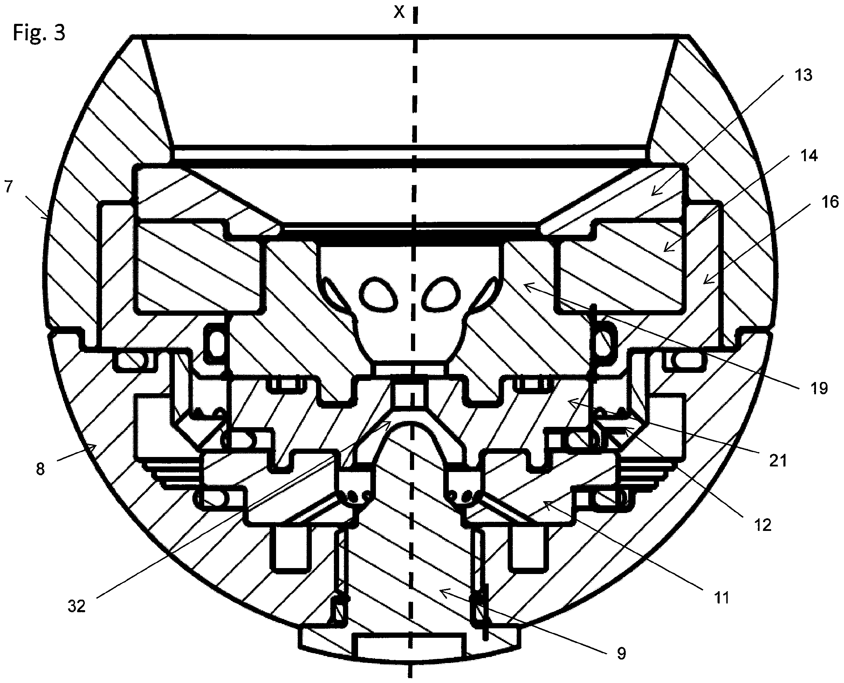

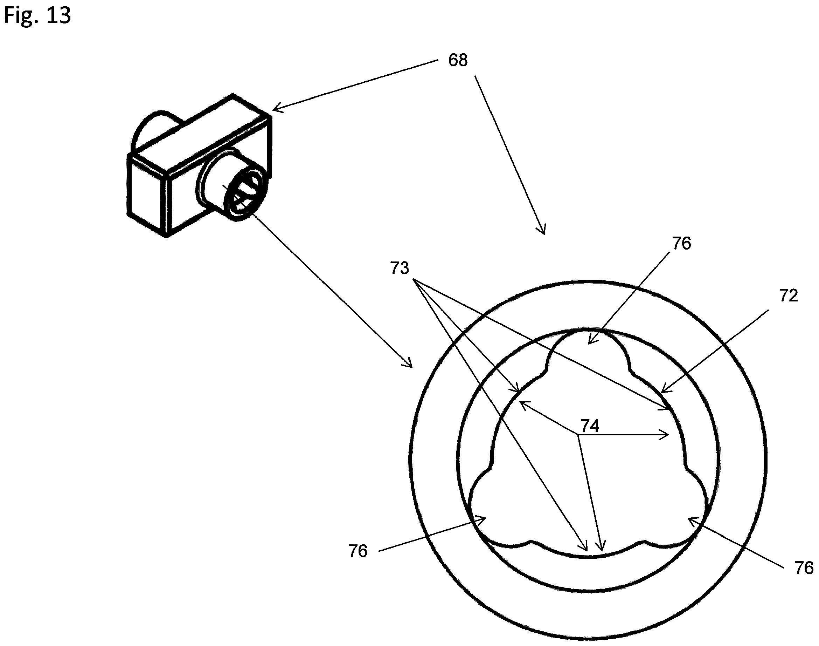

Die Drahtführung 18 weist bevorzugt die Komponenten Drahtführungsblock 68, Drahtführungsrohr 69 und Drahtführungsschraube 71 (Figur 12) auf. Allgemein entsprechen diese Komponenten denen der WO2012/95371, auf welche hiermit auch bezüglich der Einstellbarkeit bzw. Ausrichtbarkeit des Drahtes in die Achse Kathode-Primärgasdüse-Sekundärgasdüse vollumfänglich Bezug genommen wird. Allerdings weist der Drahtführungsblock 68 (Figur 13) an seinem Innenumfang 72, wie beispielhaft in Figur 3 erkennbar, eine Dreipunktlagerung 73 für den Draht 17 auf. Das bedeutet, dass der Draht 17 innerhalb des Drahtführungsblocks 68 in Umfangsrichtung des Drahtes 17 gesehen an drei Kontaktstellen 74 Führungskontakt zu dem Inneren des Drahtführungsblocks 68 hat. Jeweils benachbart zu den Kontaktstellen 74 sind Freiräume 76 in den Drahtführungsblock 68 eingebracht, durch welche am Draht anhaftende Schmutzpartikel wegbefördert werden können. Dies ist möglich, da die Rotation und der Drahtvorschub quasi eine gegenläufige Förderspirale erzeugen. In der mehrteiligen Drahtführung 18 ist es durch einen Versatz des Drahtführungsblockes 68 gegenüber der Drahtführungsschraube 71 in Richtung der Kathoden-Düsenachse (X) möglich den Winkel der Drahtführungsachse zur Kathoden-Düsenachse festzulegen bzw. zu verstellen. Die Drahtführungsachse ist dann nicht mehr axial zur Rotationsachse (Y), um welche sich die Vorrichtung dreht und in deren Richtung sich die Drahtführungsschraube 71 befindet. In dem dargestellten Ausführungsbeispiel ist die Drahtführungsachse deckungsgleich zu der Rotationsachse (Y), also zu dieser relativ nicht verstellt. Zur Festlegung bzw. Einstellung des Partikelstrahlwinkels besteht ferner die Möglichkeit den Winkel der Kathoden-Düsenachse (X) zur Rotationsachse (Y) zu ändern.

Das Gehäuse 6 ist wie bereits erwähnt beispielhaft zweiteilig mit dem Hauptelement 7 und dem Deckelelement 8 ausgeführt, was der Wartungsfreundlichkeit zu Gute kommt. Wie erkennbar ist das Gehäuse 6 überwiegend rund ausgeführt. Lediglich im Bereich der Düsenöffnung 77, ist die im Querschnitt gesehen kreisrunde Ausgestaltung des Gehäuses 6, also des Hauptelementes 7 aufgehoben. Hier ist das Gehäuse 6 abgeflacht, wobei ein schräger Übergang 78 in eine Ebene 79 übergeht, in welchem der Düsenring 13 bzw. die Düsenöffnung 77 (Figur 2) angeordnet ist. Das konsequente Beibehalten des im Querschnitt gesehen kreisrunden Gehäuses 6 vermeidet eine Schaufelwirkung, also eine Mitnahme der in einer Zylinderbohrung befindlichen Prozessgase bzw. Luft, wodurch ein negativer Einfluss der Schaufelwirkung auf die, in Richtung der zu beschichtenden Oberfläche zu transportierenden Partikel erheblich reduziert ist. Diese strömungsoptimierte Oberflächengestalt wirkt sich auch auf verringerte Ablagerungen an dem Gehäuse aus.

Das Deckelelement 8 ist mit dem Hauptelement 7 zu dem Gehäuse 6 mittels Schrauben 81 verschraubbar, wobei die Sekundärgasführung nur in dem Hauptelement 7 angeordnet ist, und das Gehäuse 6 auf der dem Prozess zugewandten Seite so kühlt (Doppelfunktion des Sekundärgases, wobei, wie erwähnt, auch das Primärgas eine Kühlfunktion hat).

Mit der Erfindung wird eine um sich rotierende Eindrahtspritzvorrichtung 1 geschaffen, mit der auch Zylinderbohrungen kleineren Durchmessers beschichtet werden können. Der zu zündende Lichtbogen zündet direkt zwischen Kathode und Anode, also auf dem Draht, und nicht wie bei bekannten Vorrichtungen bisher bekannt zwischen Kathode und Plasmagasdüse, bei welcher speziell bei höheren Stromstärken durch den Lichtbogeneinfluss die Lebensdauer gemindert wurde. Bei der Erfindung wird die Primärgasdüse 21 von dem Sekundärgas gekühlt, weswegen die Öffnungen, also Schlitze 23 vorgesehen sind. Mit den Komponenten Düsenisolator 14, Düsenring 13, Sekundärgasdüse 19, Primärgasverteiler 11 und Sekundärgasverteiler 12, welche bevorzugt aus einer Keramik gebildet sind, wird vorteilhaft quasi eine thermische und elektrische Innenisolierung bereitgestellt. Der Düsenring 13 ist quasi der einzige, äußere Isolator in der sonst metallischen äußeren Form der gesamten Vorrichtung bzw. des Gehäuses. Die Drahtführung 18 ist mit ihren Komponenten vollständig innerhalb des Gehäuses 6, also in dem Hauptelement 7 aufgenommen, so dass Außenschutzmaßnahmen entfallen können. In Figur 1 sind noch Dichtungselemente 83 erkennbar.

### Bezugszeichenliste

- 1: Vorrichtung zum thermischen Beschichten
- 2: Kopfteil
- 3: Verbinder
- 4: Adapter
- 6: Gehäuse
- 7: Hauptelement
- 8: Deckelelement
- 9: Kathode
- 11: Primärgasverteiler
- 12: Sekundärgasverteiler
- 13: Düsenring
- 14: Düsenisolator
- 16: Hauptisolator
- 18: Drahtführung
- 19: Sekundärgasdüse
- 21: Primärgasdüse
- 22: Zu 19 orientierte Seite von 21
- 23: Schlitze
- 24: Zu 11 orientierte Seite von 21
- 26: Eingreifelement an 12
- 27: Vertiefung in 11
- 28: Zentrierelement an 22 von 21
- 29: Gegenzentrierelemente an 19
- 31: Zu 21 orientierte Seite von 19
- 32: Einlaufgebiet
- 33: Sekundärgaslabyrinth
- 34: Sekundärgasbohrungen in 19
- 36: Kern von 9
- 37: Mantel von 9
- 38: Hülsenabschnitt
- 39: Flanschabschnitt
- 41: Schlüsselfläche
- 42: O-Ring
- 43: Bohrungen in 11
- 44: Unterseite von 11
- 46: Zu 21 orientierte Seite von 11
- 48: Bohrungen in 12
- 49: Schlitzwand
- 51: Montagehilfe an 12
- 52: Zentrale Öffnung in 19
- 53: Wandabschnitt
- 54: Ausnehmung
- 56: Außenring von 13
- 57: Zentralen Öffnung von 13
- 58: Fußflansch
- 59: Wandabschnitt
- 61: Außenoberfläche
- 62: Antihaft-und Isolierschicht
- 63: Bohrungen in 13
- 64: Schlitz in 13
- 66: Labyrinthbohrungen
- 67: Kreissegmentabschnitt
- 68: Drahtführungsblock
- 69: Drahtführungsrohr
- 71: Drahtführungsschraube
- 72: Innenumfang von 68
- 73: Dreipunktlagerung
- 74: Kontaktstellen
- 76: Freiräume
- 77: Düsenöffnung
- 78: Schräger Übergang
- 79: Ebene
- 81: Schrauben
- 83: Dichtungselement

## Patentansprüche

1. Vorrichtung zum thermischen Beschichten einer Oberfläche, wobei der Vorrichtung zumindest Primärgas und Sekundärgas zugeführt wird, und welche zumindest ein Gehäuse (6), eine Kathode (9), elektrisch und thermisch wirkende Isolationselemente (13,14,16), sowie eine Anode aufweist, welche als abschmelzender Draht ausgebildet über eine Drahtführung (18) in eine Düse (19,21) geführt wird, wobei die Düse (19,21) eine Primärgasdüse (21) und eine Sekundärgasdüse (19) aufweist, **dadurch gekennzeichnet, dass** die Primärgasdüse (21) unter Parallelschaltung eines Sekundärgasverteilers (12) an einem Primärgasverteiler (11) zentriert montiert ist, und an ihrer zur Sekundärgasdüse (19) orientierten Seite (22) in einer gemeinsamen Radialebene angeordnete Öffnungen (23) aufweist, sowie die Sekundärgasdüse (19) zentriert.

2. Vorrichtung nach Anspruch 1,
**dadurch gekennzeichnet, dass**
das Gehäuse (6) mehrteilig, bevorzugt zweiteilig mit zumindest einem Hauptelement (7) und zumindest einem Deckelelement (8) ausgeführt ist.

3. Vorrichtung nach Anspruch 1 oder 2,
**dadurch gekennzeichnet, dass**
die Primärgasdüse (21) Eingreifelemente (26) zum Eingreifen in Vertiefungen (27) des Primärgasverteilers (11) aufweist, wobei die Primärgasdüse (21) ein zentriert zur Kathode (9) konvergentes Einlaufgebiet (32) des Primärgases bildet.

4. Vorrichtung nach einem der vorhergehenden Ansprüche,
**dadurch gekennzeichnet, dass**
die Primärgasdüse (21) eine solche Öffnungsanzahl aufweist, welche symmetrisch größer ist als eine Sekundärgasbohrungsanzahl von Sekundärgasbohrungen (34) in der Sekundärgasdüse (19).

5. Vorrichtung nach einem der vorhergehenden Ansprüche,
**dadurch gekennzeichnet, dass**
die Kathode (9) einen bevorzugt wolframlegierten Kern (36) aufweist, welcher bevorzugt mit Kupfer umgossen ist, so dass ein Kupfermantel (37) gebildet ist.

6. Vorrichtung nach Anspruch 5,
**dadurch gekennzeichnet, dass**
der Kupfermantel (37) hutartig mit einem Hülsenabschnitt (38) und einem Flansch (39) ausgebildet ist, wobei in dem Hülsenabschnitt (38) der bevorzugt fingerförmige Kern (36) aufgenommen ist, und wobei der Hülsenabschnitt ein Außengewinde zum Einschrauben in ein korrespondierende Innengewinde des Gehäuses (6) aufweist, und wobei der Flanschabschnitt (39) eine Schlüsselfläche (41) aufweist.

7. Vorrichtung nach einem der vorhergehenden Ansprüche,
**dadurch gekennzeichnet, dass**
der Primärgasverteiler (11) konvergent und/oder konzentrisch angeordnete Bohrungen (43) aufweist, welche sich von einer Unterseite (44) zu einer zur Primärgasdüse (21) orientierten Seite (46) erstrecken.

8. Vorrichtung nach einem der vorhergehenden Ansprüche,
**dadurch gekennzeichnet, dass**
der Sekundärgasverteiler (12) konvergent und/oder konzentrisch angeordnete Bohrungen (48) aufweist, welche bevorzugt unterschiedliche Bohrungsdurchmesser haben, wobei der Sekundärgasverteiler (12) eine Montagehilfe (51) aufweist.

9. Vorrichtung nach einem der vorhergehenden Ansprüche,
**dadurch gekennzeichnet, dass**
die Sekundärgasdüse (19) einen, eine zentrale Öffnung (52) umgebenden Wandabschnitt (53) aufweist, in welchem eine Ausnehmung (54) für den Draht angeordnet ist, wobei die Sekundärgasdüse (19) in Förderrichtung des Drahtes gegenüberliegend zur Ausnehmung (54) geschlossen ist.

10. Vorrichtung nach einem der vorhergehenden Ansprüche,
**dadurch gekennzeichnet, dass**
die Sekundärgasdüse (19) konzentrisch angeordnete Sekundärgasbohrungen (34) aufweist, wobei ausströmende Sekundärgassäulen einen Druckkegel bilden.

11. Vorrichtung nach einem der vorhergehenden Ansprüche,
**dadurch gekennzeichnet, dass**
das Isolationselement (13) als Düsenring (13) ausgeführt ist, welcher aus einem Material hoher Wärmeleitfähigkeit von bevorzugt mehr als 80 W/mK gebildet ist, und/oder dass das Isolationselement (13) als einziger, äußerer Isolator der sonst metallischen Vorrichtung ausgeführt ist.

12. Vorrichtung nach einem der vorhergehenden Ansprüche,
**dadurch gekennzeichnet, dass**
das Isolationselement (13) als Düsenring (13) zumindest an seiner Außenoberfläche (61) poliert ist, und/oder eine Antihaft- und/oder Isolierschicht (62) aufweist.

13. Vorrichtung nach einem der vorhergehenden Ansprüche,
**dadurch gekennzeichnet, dass**
eine Schutzgasströmung in die Düsenöffnung (77) eingebracht wird.

14. Vorrichtung nach einem der vorhergehenden Ansprüche,
**dadurch gekennzeichnet, dass**
die Drahtführung (18) einen Drahtführungsblock (68) aufweist, welcher an seinem Innenumfang eine Vielpunktlagerung (73), bevorzugt eine Dreipunktlagerung (73) für den Draht (17) aufweist, wobei der Draht (17) innerhalb des Drahtführungsblocks (68) in Umfangsrichtung des Drahtes (17) gesehen an Kontaktstellen (74) Führungskontakt zu dem Inneren des Drahtführungsblocks (68) hat, wobei jeweils benachbart zu den Kontaktstellen (74) Freiräume (76) in den Drahtführungsblock (68) eingebracht sind.

15. Vorrichtung nach einem der vorhergehenden Ansprüche,
**dadurch gekennzeichnet, dass**
das Gehäuse (6) im Querschnitt rund ausgeführt ist, und nur an seinem Kopfteil (2) einen schräg verlaufenden Übergang (78) auf eine Ebene (79) aufweist in welcher Ebene (79) die Düsenöffnung (77) angeordnet ist, so dass nur dort der runde Querschnitt des Gehäuses (6) aufgehoben ist.

## Claims

1. Device for thermally coating a surface, wherein the device is fed at least primary gas and secondary gas, and which has at least one housing (6), a cathode (9), electrically and thermally acting insulation elements (13, 14, 16) and an anode, which is designed as a consumable wire and is guided into a nozzle (19, 21) by means of a wire guide (18), wherein the nozzle (19, 21) has a primary gas nozzle (21) and a secondary gas nozzle (19), **characterized in that** the primary gas nozzle (21) is mounted in a centred manner on a primary gas distributor (11) with a secondary gas distributor (12) connected in parallel, and has openings (23) arranged in a common radial plane on its side (22) oriented toward the secondary gas nozzle (19), and centres the secondary gas nozzle (19).

2. Device according to Claim 1,
**characterized in that**
the housing (6) is of multipart design, preferably of two-part design with at least one main element (7) and at least one cover element (8).

3. Device according to Claim 1 or 2,
**characterized in that**
the primary gas nozzle (21) has engagement elements (26) for engagement in depressions (27) in the primary gas distributor (11), wherein the primary gas nozzle (21) forms an inlet zone (32) for the primary gas which converges in a manner centred with respect to the cathode (9).

4. Device according to one of the preceding claims,
**characterized in that**
the primary gas nozzle (21) has a number of openings which is symmetrically greater than a secondary gas hole number of secondary gas holes (34) in the secondary gas nozzle (19).

5. Device according to one of the preceding claims,
**characterized in that**
the cathode (9) has a preferably tungsten-alloyed core (36), which is preferably encapsulated with copper, a copper jacket (37) thus being formed.

6. Device according to Claim 5,
**characterized in that**
the copper jacket (37) is of hat-type design with a sleeve portion (38) and a flange (39), wherein the preferably finger-shaped core (36) is accommodated in the sleeve portion (38), and wherein the sleeve portion has an external thread for screwing into a corresponding internal thread of the housing (6), and wherein the flange portion (39) has a key surface (41).

7. Device according to one of the preceding claims,
**characterized in that**
the primary gas distributor (11) has convergently and/or concentrically arranged holes (43), which extend from a lower side (44) to a side (46) oriented toward the primary gas nozzle (21).

8. Device according to one of the preceding claims,
**characterized in that**
the secondary gas distributor (12) has convergently and/or concentrically arranged holes (48), which preferably have different hole diameters, wherein the secondary gas distributor (12) has an assembly aid (51).

9. Device according to one of the preceding claims,
**characterized in that**
the secondary gas nozzle (19) has a wall portion (53) which surrounds a central opening (52) and in which a recess (54) for the wire is arranged, wherein the secondary gas nozzle (19) is closed opposite the recess (54) in the delivery direction of the wire.

10. Device according to one of the preceding claims,
**characterized in that**
the secondary gas nozzle (19) has concentrically arranged secondary gas holes (34), wherein outflowing secondary gas columns form a pressure cone.

11. Device according to one of the preceding claims,
**characterized in that**
the insulation element (13) is embodied as a nozzle ring (13), which is formed from a material of high thermal conductivity, preferably more than 80 W/mK, and/or **in that** the insulation element (13) is embodied as the only external insulator of the otherwise metallic device.

12. Device according to one of the preceding claims,
**characterized in that**
the insulation element (13), as a nozzle ring (13), is polished at least on the outer surface (61) thereof, and/or has an anti-adhesion and/or insulating layer (62).

13. Device according to one of the preceding claims,
**characterized in that**
a shielding gas flow is introduced into the nozzle opening (77).

14. Device according to one of the preceding claims,
**characterized in that**
the wire guide (18) has a wire guide block (68), which has multipoint support (73), preferably three-point support (73), for the wire (17) on its inner circumference, wherein, within the wire guide block (68), the wire (17) has contact for guidance with the interior of the wire guide block (68) at contact points (74), as viewed in the circumferential direction of the wire (17), wherein respective free spaces (76) are introduced into the wire guide block (68) in positions adjacent to the contact points (74).

15. Device according to one of the preceding claims,
**characterized in that**
the housing (6) is embodied with a round cross section and has an obliquely extending transition (78) to a plane (79) only on a head part (2) of the housing, in which plane (79) the nozzle opening (77) is arranged, and it is therefore only there that the round cross section of the housing (6) is abandoned.

## Revendications

1. Dispositif pour le revêtement thermique d'une surface, dans lequel au moins un gaz primaire et un gaz secondaire est envoyé au dispositif, et qui présente au moins un boîtier (6), une cathode (9), des éléments électriquement et thermiquement isolants (13, 14, 16) ainsi qu'une anode, qui est guidée sous la forme d'un fil fusible par un guide-fil (18) dans une buse (19, 21), dans lequel la buse (19, 21) présente une buse à gaz primaire (21) et une buse à gaz secondaire (19), **caractérisé en ce que** la buse à gaz primaire (21) est montée de façon centrée sur un distributeur de gaz primaire (11) avec montage en parallèle d'un distributeur de gaz secondaire (12), et présente sur son côté (22) orienté vers la buse à gaz secondaire (19) des ouvertures (23) disposées dans un plan radial commun, et il centre la buse à gaz secondaire (19).

2. Dispositif selon la revendication 1, **caractérisé en ce que** le boîtier (6) est réalisé en plusieurs parties, de préférence en deux parties, avec au moins un élément principal (7) et au moins un élément de couvercle (8).

3. Dispositif selon la revendication 1 ou 2, **caractérisé en ce que** la buse à gaz primaire (21) présente des éléments d'accrochage (26) pour l'accrochage dans des creux (27) du distributeur de gaz primaire (11), dans lequel la buse à gaz primaire (21) forme une zone d'entrée convergente (32) du gaz primaire centrée par rapport à la cathode (9).

4. Dispositif selon l'une quelconque des revendications précédentes, **caractérisé en ce que** la buse à gaz primaire (21) présente un nombre d'ouvertures, qui est symétriquement plus élevé qu'un nombre de trous à gaz secondaire de trous à gaz secondaire (34) dans la buse à gaz secondaire (19).

5. Dispositif selon l'une quelconque des revendications précédentes, **caractérisé en ce que** la cathode (9) présente un noyau (36) de préférence allié au tungstène, qui est de préférence enrobé de cuivre, de telle manière qu'une chemise de cuivre (37) soit formée.

6. Dispositif selon la revendication 5, **caractérisé en ce que** la chemise de cuivre (37) est configurée en forme de chapeau avec une partie de douille (38) et une bride (39), dans lequel le noyau (36) de préférence en forme de doigt est logé dans la partie de douille (38), et dans lequel la partie de douille présente un filet extérieur à visser dans un filet intérieur correspondant du boîtier (6), et dans lequel la partie de bride (39) présente une face de clé (41).

7. Dispositif selon l'une quelconque des revendications précédentes, **caractérisé en ce que** le distributeur de gaz primaire (11) présente des trous (43) disposés de façon convergente et/ou concentrique, qui s'étendent depuis un côté inférieur (44) jusqu'à un côté (46) orienté vers la buse à gaz primaire (21).

8. Dispositif selon l'une quelconque des revendications précédentes, **caractérisé en ce que** le distributeur de gaz secondaire (12) présente des trous (48) disposés de façon convergente et/ou concentrique, qui ont un diamètre de trou de préférence différent, dans lequel le distributeur de gaz secondaire (12) présente un accessoire de montage (51).

9. Dispositif selon l'une quelconque des revendications précédentes, **caractérisé en ce que** la buse à gaz secondaire (19) présente une partie de paroi (53) entourant une ouverture centrale (52), dans laquelle un évidement (54) pour le fil est agencé, dans lequel la buse à gaz secondaire (19) est fermée dans la direction de transport du fil en face de l'évidement (54).

10. Dispositif selon l'une quelconque des revendications précédentes, **caractérisé en ce que** la buse à gaz secondaire (19) présente des trous à gaz secondaire (34) disposés de façon concentrique, dans lequel des colonnes de gaz secondaire sortantes forment un cône de pression.

11. Dispositif selon l'une quelconque des revendications précédentes, **caractérisé en ce que** l'élément isolant (13) est réalisé sous forme d'anneau de buse (13), qui est formé en un matériau ayant une conductibilité thermique élevée de préférence de plus de 80 W/mK, et/ou **en ce que** l'élément isolant (13) est réalisé sous forme de seul isolateur extérieur du dispositif par ailleurs métallique.

12. Dispositif selon l'une quelconque des revendications précédentes, **caractérisé en ce que** l'élément isolant (13) en forme d'anneau de buse (13) est poli au moins sur sa surface extérieure (61), et/ou présente une couche antiadhésive et/ou isolante (62).

13. Dispositif selon l'une quelconque des revendications précédentes, **caractérisé en ce qu'**un courant de gaz de protection est introduit dans l'ouverture de buse (77).

14. Dispositif selon l'une quelconque des revendications précédentes, **caractérisé en ce que** le guide-fil (18) présente un bloc de guidage de fil (68), qui présente à sa périphérie intérieure un appui à plusieurs points (73), de préférence un appui à trois points (73) pour le fil (17), dans lequel le fil (17) présente à l'intérieur du bloc de guidage de fil (68), en considérant la direction périphérique du fil (17), un contact de guidage en des points de contact (74) vers l'intérieur du bloc de guidage de fil (68), dans lequel des espaces libres (76) sont ménagés dans le bloc de guidage de fil (68) respectivement à proximité des points de contact (74).

15. Dispositif selon l'une quelconque des revendications précédentes, **caractérisé en ce que** le boîtier (6) présente une section transversale ronde et ne présente que sur sa partie de tête (2) une transition orientée en oblique (78) vers un plan (79), plan (79) dans lequel l'ouverture de buse (77) est disposée, de telle manière que la section transversale ronde du boîtier (6) ne disparaisse qu'à cet endroit.
